# EUROPEAN PATENT APPLICATION

(11) **EP 4 506 488 A1**
(43) Date of publication of application: **12.02.2025**
(21) Application number: 23780273.1
(22) Date of filing: 24.03.2023
(51) Int. Cl.: C23F 11/14, B23K 35/26, C22C 13/00, C23C 22/52

(54) **SURFACE TREATMENT AGENT FOR COPPER OR COPPER ALLOY**

(30) Priority: 29.03.2022 JP 2022054331
(71) Applicant: Shikoku Chemicals Corporation, Marugame-shi, Kagawa 763-8504 (JP)
(72) Inventor: MAE Tomoya, Ayauta-gun, Kagawa 769-0202 (JP); YOSHINARI Koichi, Ayauta-gun, Kagawa 769-0202 (JP); NAKANISHI Masato, Ayauta-gun, Kagawa 769-0202 (JP)
(74) Representative: Ipsilon
(86) International application number: PCT/JP2023/012043
(87) International publication number: WO 2023/190263

(57) **Abstract**

The present invention addresses the problem of providing a surface treatment agent that exhibits excellent heat resistance of a chemical conversion film formed on a copper surface and ensures good solderability during soldering. A surface treatment agent for copper or copper alloy according to the present invention contains: an imidazole compound represented by chemical formula (I) or a benzimidazole compound represented by chemical formula (II); and a triazole compound represented by chemical formula (III). The definition of each substituent in chemical formulae (I)-(III) is the same as that defined in the specification.

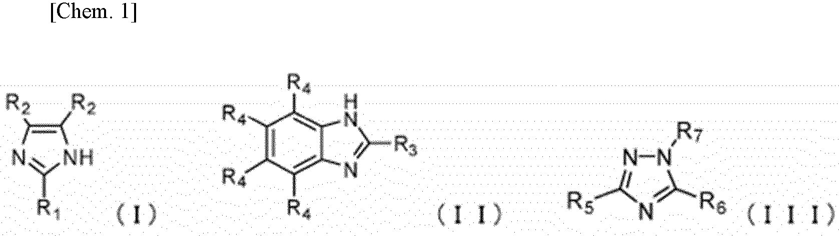

## Description

### TECHNICAL FIELD

The present invention relates to a surface treatment agent used for copper or a copper alloy of a printed wiring board.

### BACKGROUND ART

Recently, surface mounting in which a mounting density is improved has been widely adopted as a mounting method of a printed wiring board. Such a surface mounting method is classified into double-sided surface mounting in which a chip component is bonded with cream solder, mixed mounting in which surface mounting of a chip component with cream solder and through-hole mounting of a discrete component are combined, and the like. In any of the mounting methods, since the print wiring board is soldered a plurality of times, the print wiring board is exposed to a high temperature each time and receives a severe thermal history.

As a result, since a surface of copper or a copper alloy (hereinafter, may be simply referred to as copper) constituting a circuit portion of the printed wiring board is heated to promote formation of an oxide film, solderability of the surface of the circuit portion cannot be maintained well.

In order to protect a copper circuit portion of such a printed wiring board from oxidation due to air or heat, a treatment of forming a chemical conversion coating on a surface of the copper circuit portion by using a surface treatment agent (preflux) has been widely performed. The chemical conversion coating called an organic solderability preservative (OSP) film formed by a surface treatment agent is required to protect the copper circuit portion without denaturing (deteriorating) the chemical conversion coating even after the copper circuit portion receives a thermal history a plurality of times, to thereby maintain the solderability well.

On the other hand, when bonding an electronic component to a printed wiring board or the like in the related art, an eutectic solder of a tin-lead alloy has been widely used. However, in recent years, there has been a concern about the harmfulness of lead (Pb) contained in the solder alloy to the human body, and thus there is a demand for using a solder that does not contain lead.

For this, various lead-free solders have been studied. For example, a lead-free solder in which tin (Sn) is used as a base metal and a metal such as silver (Ag), zinc (Zn), bismuth (Bi), indium (In), antimony (Sb), cobalt (Co), manganese (Mn), nickel (Ni), or copper (Cu) is added thereto has been proposed.

However, the Sn-Pb-based eutectic solder in the related art has excellent wettability with respect to a surface of a metal, particularly copper, which is used as a bonding base material, and is firmly bonded to copper, and thus, high reliability is obtained in terms of the bondability between copper members.

Meanwhile, the lead-free solder has poor wettability to the surface of copper as compared with the Sn-Pb-based eutectic solder in the related art. Therefore, the solderability was poor, and thus bonding defects such as void generation occurred, and a bonding strength was also low.

Therefore, in the case of using the lead-free solder, it is required to select a solder alloy having better solderability and a flux suitable for the lead-free solder. In addition, even for a surface treatment agent used for preventing oxidation of a copper surface, a function of improving the wettability of the lead-free solder and improving the solderability is required.

In addition, since a melting point of most lead-free solders is high and a soldering temperature is higher by about 20°C to 50°C than that of the Sn-Pb-based eutectic solders in the related art, it is also desired to form a chemical conversion coating having excellent heat resistance with respect to the surface treatment agent.

An imidazole compound has been used as an active component in such a surface treatment agent, and various studies have been conducted. For example, Patent Literatures 1 and 2 propose a surface treatment agent of copper or a copper alloy, which contains an imidazole compound having a specific substituent.

### CITATION LIST

### PATENT LITERATURE

[Patent Literature 1] JP2012-241251A
[Patent Literature 2] JP2013-1977A

### SUMMARY OF INVENTION

### TECHNICAL PROBLEM

In order to improve performance of electronic equipment, it is required to maintain excellent solderability of electronic components to a printed wiring board, and in particular, in the case where lead-free solder is used, it is required to further improve a surface treatment agent in order to prevent oxidation of a copper surface.

Therefore, an object of the present invention is to provide a surface treatment agent that has excellent heat resistance of a chemical conversion coating formed on a copper surface and that can obtain excellent solderability when performing soldering.

### SOLUTION TO PROBLEM

As a result of intensive studies to achieve the above-described object, the present inventors have found that the object can be achieved by treating a printed wiring board having a copper circuit portion with a surface treatment agent containing an imidazole compound or a benzimidazole compound having a specific structure and further containing a triazole compound having a specific structure as an auxiliary agent, and have completed the present invention.

That is, the present invention is as described in [1] to [6] below.
[1] A surface treatment agent for copper or a copper alloy, containing an imidazole compound represented by Chemical Formula (I) or a benzimidazole compound represented by Chemical Formula (II), and a triazole compound represented by Chemical Formula (III). 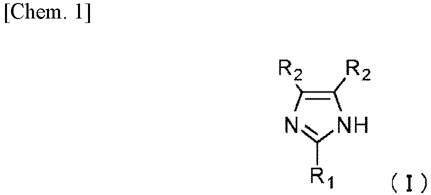
   (In Formula (I), R₁ represents a hydrogen atom, a linear or branched alkyl group having 1 to 18 carbon atoms, a cycloalkyl group, a phenyl group which may have a substituent, a naphthyl group which may have a substituent, a benzyl group which may have a substituent, a naphthylmethyl group, -CH-(Ph)₂, - (CH₂)ₖ-Ph, a thienyl group, a thienylmethyl group, a furyl group, or a pyridyl group, where Ph represents a phenyl group which may have a substituent, and k represents an integer of 2 to 5,
   R₂'s are the same as or different from each other, and each represent a hydrogen atom, a linear or branched alkyl group having 1 to 18 carbon atoms, a cycloalkyl group, a phenyl group which may have a substituent, a naphthyl group which may have a substituent, a thienyl group, or a furyl group, where the case where R₂'s are hydrogen atoms at the same time is excluded.) 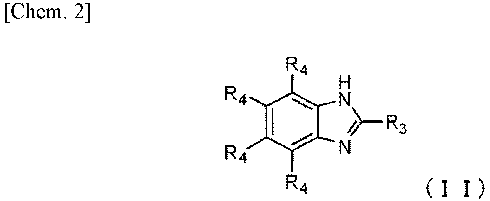
   (In Formula (II), R₃ represents a linear or branched alkyl group having 1 to 18 carbon atoms, - (CH₂)ₘ-Ph, -(CH₂)ₘ-Np, or a group represented by Formula (1), where Ph represents a phenyl group which may have a substituent, Np represents a naphthyl group which may have a substituent, and m represents an integer of 1 to 5. 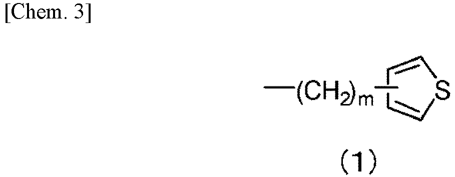
   (in Formula (1), m represents an integer of 1 to 5)
   R₄'s are the same as or different from each other and each represent a hydrogen atom, a linear or branched alkyl group having 1 to 18 carbon atoms, a nitro group, or a halogen atom.) 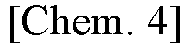 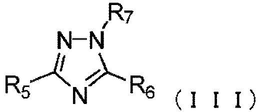
   (In Formula (III), R₅ and R₆ are the same as or different from each other and each represent a hydrogen atom, a linear or branched alkyl group having 1 to 18 carbon atoms, an amino group, a phenyl group which may have a substituent, a benzyl group which may have a substituent, a naphthyl group, a pyridyl group, or a group represented by Formula (2), where the case where R₅ and R₆ are groups represented by Formula (2) at the same time is excluded. 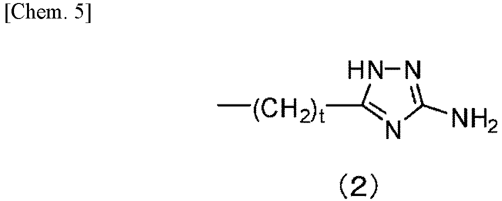
   (in Formula (2), t represents an integer of 0 to 12)
   R₇ represents a hydrogen atom, a benzyl group, or -(CH₂)ₙ-COOH, and n represents an integer of 1 to 5.)
[2] The surface treatment agent for copper or a copper alloy according to [1], further containing a halide ion.
[3] The surface treatment agent for copper or a copper alloy according to [2], in which the halide ion is a chloride ion.
[4] The surface treatment agent for copper or a copper alloy according to any one of [1] to [3], further containing a zinc ion.
[5] The surface treatment agent for copper or a copper alloy according to any one of [1] to [4], in which the triazole compound represented by Chemical Formula (III) is contained in a molar ratio of 0.005 to 3.0 with respect to the imidazole compound represented by Chemical Formula (I) or the benzimidazole compound represented by Chemical Formula (II).
[6] The surface treatment agent for copper or a copper alloy according to any one of [1] to [5], in which pH is 2 to 5.

### ADVANTAGEOUS EFFECTS OF INVENTION

The surface treatment agent for copper or a copper alloy of the present invention can form a chemical conversion coating having excellent heat resistance on a surface of the copper or the copper alloy constituting a circuit portion of a printed wiring board or the like, and can dramatically improve wettability of solder with respect to the surface, thereby making it possible to obtain excellent solderability.

### DESCRIPTION OF EMBODIMENTS

Hereinafter, the present invention will be described in detail. The present invention is not limited to the embodiments described below.

A surface treatment agent for copper or a copper alloy of the present invention is a surface treatment agent (water-soluble preflux) containing, as an active component, an imidazole compound represented by Formula (I) or a benzimidazole compound represented by Formula (II), and containing, as an auxiliary agent, a triazole compound represented by Formula (III).

In the case where the surface treatment agent of the present invention adheres to copper or a copper alloy, copper ions eluted from a copper surface react with the imidazole compound represented by Formula (I) or the benzimidazole compound represented by Formula (II), to form a copper-imidazole complex. Since this copper-imidazole complex is insoluble in the surface treatment agent, the copper-imidazole complex is deposited on the copper or the copper surface to form a chemical conversion coating (OSP film). The action is not clear; however it is presumed that, as the surface treatment agent contains the triazole compound represented by Formula (III), the triazole compound is incorporated into the chemical conversion coating, thereby improving heat resistance of the chemical conversion coating.

### (Imidazole compound represented by Formula (I))

The imidazole compound represented by Formula (I) (hereinafter, may be referred to as an imidazole compound (I)) has the following structure. 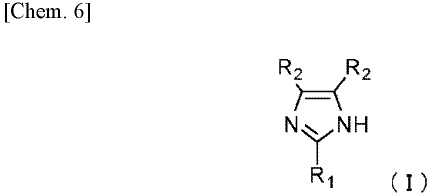
(In Formula (I), R₁ represents a hydrogen atom, a linear or branched alkyl group having 1 to 18 carbon atoms, a cycloalkyl group, a phenyl group which may have a substituent, a naphthyl group which may have a substituent, a benzyl group which may have a substituent, a naphthylmethyl group, -CH-(Ph)₂, - (CH₂)ₖ-Ph, a thienyl group, a thienylmethyl group, a furyl group, or a pyridyl group, where Ph represents a phenyl group which may have a substituent, and k represents an integer of 2 to 5,
R₂'s are the same as or different from each other, and each represent a hydrogen atom, a linear or branched alkyl group having 1 to 18 carbon atoms, a cycloalkyl group, a phenyl group which may have a substituent, a naphthyl group which may have a substituent, a thienyl group, or a furyl group, where the case where R₂'s are hydrogen atoms at the same time is excluded.)

In Formula (I), R₁ represents a hydrogen atom, a linear or branched alkyl group having 1 to 18 carbon atoms, a cycloalkyl group, a phenyl group which may have a substituent, a naphthyl group which may have a substituent, a benzyl group which may have a substituent, a naphthylmethyl group, -CH-(Ph)₂ (Ph is a phenyl group which may have a substituent), -(CH₂)ₖ-Ph (Ph is a phenyl group which may have a substituent and k is an integer of 2 to 5), a thienyl group, a thienylmethyl group, a furyl group, or a pyridyl group.

Specific examples of the linear alkyl group having 1 to 18 carbon atoms include a methyl group, an ethyl group, an n-propyl group, an n-butyl group, an n-pentyl group, an n-hexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, and an n-octadecyl group. The branched alkyl group having 1 to 18 carbon atoms is a branched chain alkyl group having 3 to 18 carbon atoms, and specific examples thereof include an isopropyl group, an isobutyl group, an s-butyl group, a t-butyl group, an isopentyl group, an s-pentyl group, a t-pentyl group, an isohexyl group, an s-hexyl group, a t-hexyl group, an isoheptyl group, an s-heptyl group, a t-heptyl group, an isooctyl group, an s-octyl group, and a t-octyl group.

Examples of the substituent to be substituted with hydrogen of the phenyl group, the naphthyl group, and the benzyl group include a linear or branched alkyl group having 1 to 18 carbon atoms, a phenyl group, a methoxy group, an ethoxy group, and a halogen atom.

Examples of the halogen atom to be substituted with hydrogen of the phenyl group, the naphthyl group, and the benzyl group include a fluorine atom (F), a chlorine atom (Cl), a bromine atom (Br), and an iodine atom (I). Specific examples of the phenyl group substituted with a halogen atom include a 2-fluorophenyl group, a 3-fluorophenyl group, a 4-fluorophenyl group, a 2-chlorophenyl group, a 3-chlorophenyl group, a 4-chlorophenyl group, a 2-bromophenyl group, a 3-bromophenyl group, a 4-bromophenyl group, a 2-iodophenyl group, a 3-iodophenyl group, a 4-iodophenyl group, a 2,3-dichlorophenyl group, a 2,4-dichlorophenyl group, a 2,5-dichlorophenyl group, a 2,6-dichlorophenyl group, a 3,4-dichlorophenyl group, a 3,5-dichlorophenyl group, a 2,4,5-trichlorophenyl group, and a 3,4,5-trichlorophenyl group. Specific examples of the benzyl group substituted with a halogen atom include a 2-fluorobenzyl group, a 3-fluorobenzyl group, a 4-fluorobenzyl group, a 2-chlorobenzyl group, a 3-chlorobenzyl group, a 4-chlorobenzyl group, a 2-bromobenzyl group, a 3-bromobenzyl group, a 4-bromobenzyl group, a 2-iodobenzyl group, a 3-iodobenzyl group, a 4-iodobenzyl group, a 2,3-dichlorobenzyl group, a 2,4-dichlorobenzyl group, a 2,5-dichlorobenzyl group, a 2,6-dichlorobenzyl group, a 3,4-dichlorobenzyl group, a 3,5-dichlorobenzyl group, a 2,4,5-trichlorobenzyl group, and a 3,4,5-trichlorobenzyl group.

Examples of the thienyl group include a 2-thienyl group and a 3-thienyl group, and examples of the furyl group include a 2-furyl group and a 3-furyl group.

From a viewpoint of the heat resistance of the chemical conversion coating, R₁ is preferably a linear or branched alkyl group having 1 to 18 carbon atoms, a phenyl group which may have a substituent, a naphthyl group which may have a substituent, a benzyl group which may have a substituent, a naphthylmethyl group, or a thienyl group.

R₂ represents a hydrogen atom, a linear or branched alkyl group having 1 to 18 carbon atoms, a cycloalkyl group, a phenyl group which may have a substituent, a naphthyl group which may have a substituent, a thienyl group, or a furyl group. These substituents are the same as those described above for R₁. Two R₂'s may be the same as or different from each other, but R₂'s do not represent hydrogen atoms at the same time.

From a viewpoint of the heat resistance of the chemical conversion coating, R₂ is preferably a hydrogen atom, a linear or branched alkyl group having 1 to 18 carbon atoms, a phenyl group which may have a substituent, a naphthyl group which may have a substituent, a thienyl group, or a furyl group. Here, the case where R₂'s are hydrogen atoms at the same time is excluded.

The imidazole compound represented by Formula (I) (imidazole compound (I)) is preferably imidazole compounds represented by Formula (I-1) to Formula (I-6).

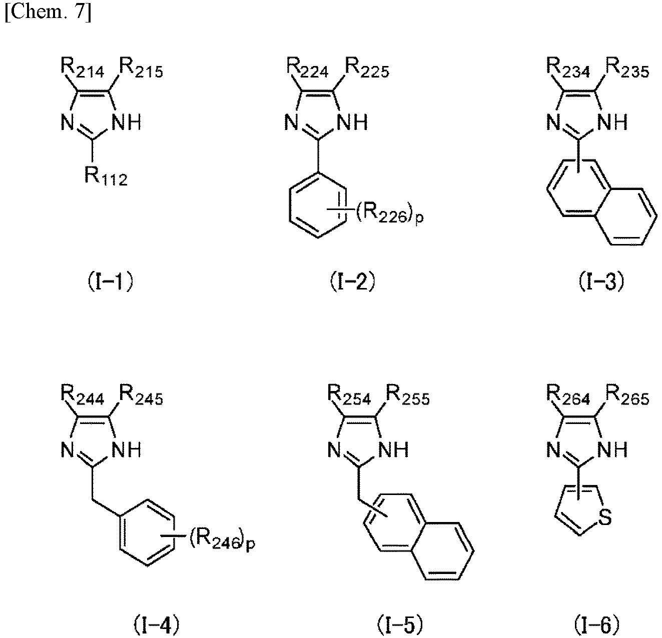

(In Formula (I-1), R₁₁₂ represents a linear or branched alkyl group having 1 to 18 carbon atoms, R₂₁₄ represents a linear or branched alkyl group having 1 to 18 carbon atoms or a phenyl group which may have a substituent, and R₂₁₅ represents a hydrogen atom or a linear or branched alkyl group having 1 to 18 carbon atoms.

In Formula (I-2), R₂₂₄ represents a phenyl group which may have a substituent, a naphthyl group which may have a substituent, a thienyl group, or a furyl group, R₂₂₅ represents a hydrogen atom or a linear or branched alkyl group having 1 to 18 carbon atoms, R₂₂₆'s are the same as or different from each other and each represent a linear or branched alkyl group having 1 to 18 carbon atoms, a methoxy group, an ethoxy group, or a halogen atom, and p represents an integer of 0 to 3.

In Formula (I-3), R₂₃₄ represents a phenyl group which may have a substituent, and R₂₃₅ represents a hydrogen atom or a linear or branched alkyl group having 1 to 18 carbon atoms.

In Formula (I-4), R₂₄₄ represents a phenyl group which may have a substituent, a naphthyl group, or a thienyl group, R₂₄₅ represents a hydrogen atom, a linear or branched alkyl group having 1 to 18 carbon atoms, or a phenyl group which may have a substituent, R₂₄₆'s are the same as or different from each other and each represent a linear or branched alkyl group having 1 to 18 carbon atoms or a halogen atom, and p represents an integer of 0 to 3.

In Formula (I-5), R₂₅₄ represents a phenyl group which may have a substituent, and R₂₅₅ represents a hydrogen atom or a linear or branched alkyl group having 1 to 18 carbon atoms.

In Formula (I-6), R₂₆₄ represents a phenyl group which may have a substituent or a naphthyl group, and R₂₆₅ represents a hydrogen atom, a linear or branched alkyl group having 1 to 18 carbon atoms, or a phenyl group which may have a substituent.)

As specific examples of the imidazole compound (I), examples of the imidazole compound represented by Formula (I-1) include:
2-ethyl-4-methylimidazole,
2-undecyl-4-methylimidazole,
2,4,5-trimethylimidazole,
4,5-dimethyl-2-octylimidazole,
4-(3,4-dichlorophenyl)-5-methyl-2-nonylimidazole, and
4-(2,4-dichlorophenyl)-5-methyl-2-undecylimidazole.

Examples of the imidazole compound represented by Formula (I-2) include:
2,4-diphenylimidazole,
2,4-diphenyl-5-methylimidazole,
2,4-diphenyl-5-hexylimidazole,
2-phenyl-4-(2-chlorophenyl)imidazole,
2-phenyl-4-(3-chlorophenyl)imidazole,
2-phenyl-4-(4-chlorophenyl)imidazole,
2-phenyl-4-(4-fluorophenyl)imidazole,
2-phenyl-4-(4-bromophenyl)imidazole,
2-phenyl-4-(4-iodophenyl)imidazole,
2-phenyl-4-(2,3-dichlorophenyl)imidazole,
2-phenyl-4-(2,4-dichlorophenyl)imidazole,
2-phenyl-4-(2,5-dichlorophenyl)imidazole,
2-phenyl-4-(2,6-dichlorophenyl)imidazole,
2-phenyl-4-(3,4-dichlorophenyl)imidazole,
2-phenyl-4-(3,5-dichlorophenyl)imidazole,
2-phenyl-4-(2-propyl-3-chlorophenyl)imidazole,
2-phenyl-4-(2-chlorophenyl)-5-methylimidazole,
2-phenyl-4-(3-chlorophenyl)-5-methylimidazole,
2-phenyl-4-(4-chlorophenyl)-5-methylimidazole,
2-phenyl-4-(2,3-dichlorophenyl)-5-methylimidazole,
2-phenyl-4-(2,4-dichlorophenyl)-5-methylimidazole,
2-phenyl-4-(2,5-dichlorophenyl)-5-methylimidazole,
2-phenyl-4-(2,6-dichlorophenyl)-5-methylimidazole,
2-phenyl-4-(3,4-dichlorophenyl)-5-methylimidazole,
2-phenyl-4-(3,5-dichlorophenyl)-5-methylimidazole,
2-phenyl-4-(2,3-dichlorophenyl)-5-propylimidazole,
2-phenyl-4-(2,4-dichlorophenyl)-5-undecylimidazole,
2-phenyl-4-(1-naphthyl)imidazole,
2-phenyl-4-(2-naphthyl)imidazole,
2-phenyl-4-(1-naphthyl)-5-methylimidazole,
2-phenyl-4-(2-naphthyl)-5-methylimidazole,
2-phenyl-4-(2-thienyl)imidazole,
2-phenyl-4-(3-thienyl)imidazole,
5-methyl-2-phenyl-4-(2-thienyl)imidazole,
5-methyl-2-phenyl-4-(3-thienyl)imidazole,
4-(2-furyl)-2-phenylimidazole,
2-(2-methylphenyl)-4-phenylimidazole,
2-(3-octylphenyl)-4-phenylimidazole,
2-(4-methylphenyl)-4-phenylimidazole,
2-(4-isopropylphenyl)-4-phenylimidazole,
2-(4-methylphenyl)-4-phenyl-5-methylimidazole,
2-(4-isopropylphenyl)-4-phenyl-5-methylimidazole,
2-(4-biphenyl)-4-phenyl-5-methylimidazole,
2-(2,4-dimethylphenyl)-4-phenylimidazole,
2-(2-chlorophenyl)-4-phenylimidazole,
2-(3-chlorophenyl)-4-phenylimidazole,
2-(4-chlorophenyl)-4-phenylimidazole,
2-(4-fluorophenyl)-4-phenylimidazole,
2-(4-bromophenyl)-4-phenylimidazole,
2-(4-iodophenyl)-4-phenylimidazole,
2-(2,3-dichlorophenyl)-4-phenylimidazole,
2-(2,4-dichlorophenyl)-4-phenylimidazole,
2-(2,5-dichlorophenyl)-4-phenylimidazole,
2-(2,6-dichlorophenyl)-4-phenylimidazole,
2-(3,4-dichlorophenyl)-4-phenylimidazole,
2-(3,5-dichlorophenyl)-4-phenylimidazole,
2-(2,4-dibromophenyl)-4-phenylimidazole,
2-(2-methyl-4-chlorophenyl)-4-phenylimidazole,
2-(4-chlorophenyl)-4-phenyl-5-methylimidazole,
4-(2,4-dichlorophenyl)-2-(4-methoxyphenyl)-5-methylimidazole,
2-(2,3-dichlorophenyl)-4-phenyl-5-methylimidazole,
2-(2,4-dichlorophenyl)-4-phenyl-5-methylimidazole,
2-(2,5-dichlorophenyl)-4-phenyl-5-methylimidazole,
2-(2,6-dichlorophenyl)-4-phenyl-5-methylimidazole,
2-(3,4-dichlorophenyl)-4-phenyl-5-methylimidazole,
2-(3,5-dichlorophenyl)-4-phenyl-5-methylimidazole,
2-(2,4-dichlorophenyl)-4-phenyl-5-ethylimidazole,
2-(2,3-dichlorophenyl)-4-phenyl-5-decylimidazole,
2-(3,4-dichlorophenyl)-4-phenyl-5-heptadecylimidazole,
2-(2-heptyl-4-chlorophenyl)-4-phenyl-5-isobutylimidazole,
2,4-bis(4-chlorophenyl)imidazole,
2-(2,4-dichlorophenyl)-4-(3,4-dichlorophenyl)-5-methylimidazole,
4-(2,4-dichlorophenyl)-2-(3,4-dimethoxyphenyl)-5-methylimidazole,
4-(3,4-dichlorophenyl)-2-(3,4-dimethoxyphenyl)-5-methylimidazole,
2-(4-methylphenyl)-4-(2-naphthyl)imidazole,
2-(4-isopropylphenyl)-4-(1-naphthyl)imidazole,
2-(3,4-dimethoxyphenyl)-4-(1-naphthyl)imidazole, and
2-(4-methylphenyl)-4-(4-chloro-6-butyl-1-naphthyl)imidazole.

Examples of the imidazole compound represented by Formula (I-3) include:
2-(1-naphthyl)-4-phenylimidazole,
2-(2-naphthyl)-4-phenylimidazole,
2-(1-naphthyl)-4-phenyl-5-methylimidazole, and
2-(2-naphthyl)-4-phenyl-5-methylimidazole.

Examples of the imidazole compound represented by Formula (I-4) include:
2-benzyl-4-phenylimidazole,
2-benzyl-4-(4-hexylphenyl)imidazole,
2-benzyl-4-(2-chlorophenyl)imidazole,
2-benzyl-4-(3-chlorophenyl)imidazole,
2-benzyl-4-(4-chlorophenyl)imidazole,
2-benzyl-4-(4-bromophenyl)imidazole,
2-benzyl-4-(2,3-dichlorophenyl)imidazole,
2-benzyl-4-(2,4-dichlorophenyl)imidazole,
2-benzyl-4-(2,5-dichlorophenyl)imidazole,
2-benzyl-4-(2,6-dichlorophenyl)imidazole,
2-benzyl-4-(3,4-dichlorophenyl)imidazole,
2-benzyl-4-(3,5-dichlorophenyl)imidazole,
2-benzyl-4-(2,4,5-trichlorophenyl)imidazole,
2-benzyl-4-(3,4,5-trichlorophenyl)imidazole,
2-benzyl-5-methyl-4-phenylimidazole,
2-benzyl-5-butyl-4-phenylimidazole,
2-benzyl-5-heptyl-4-phenylimidazole,
2-benzyl-5-hexyl-4-phenylimidazole,
2-benzyl-5-octyl-4-phenylimidazole,
2-benzyl-4-(2-chlorophenyl)-5-methylimidazole,
2-benzyl-4-(3-chlorophenyl)-5-methylimidazole,
2-benzyl-4-(4-chlorophenyl)-5-methylimidazole,
2-benzyl-4-(2,4-dichlorophenyl)-5-methylimidazole,
2-benzyl-4-(3,4-dichlorophenyl)-5-methylimidazole,
2-benzyl-5-methyl-4-(2,4,5-trichlorophenyl)imidazole,
2-benzyl-4,5-diphenylimidazole,
2-benzyl-4-(1-naphthyl)imidazole,
2-benzyl-4-(2-naphthyl)imidazole,
2-(2-chlorobenzyl)-4-phenylimidazole,
2-(3-chlorobenzyl)-4-phenylimidazole,
2-(4-chlorobenzyl)-4-phenylimidazole,
2-(4-bromobenzyl)-4-phenylimidazole,
2-(4-chlorobenzyl)-4-(4-chlorophenyl)imidazole,
4-(4-bromophenyl)-2-(4-chlorobenzyl)imidazole,
2-(4-bromobenzyl)-4-(4-chlorophenyl)imidazole,
2-(4-fluorobenzyl)-4-(4-fluorophenyl)imidazole,
2-(2-bromobenzyl)-4-(4-bromophenyl)imidazole,
2-(4-bromobenzyl)-4-(3-bromophenyl)imidazole,
4-(4-butylphenyl)-2-(2-chlorobenzyl)imidazole,
2-(2-chlorobenzyl)-4-(4-hexylphenyl)imidazole,
2-(2-chlorobenzyl)-4-(2,4-dichlorophenyl)imidazole,
2-(2-chlorobenzyl)-4-(3,4-dichlorophenyl)imidazole,
2-(3-chlorobenzyl)-4-(2,4-dichlorophenyl)imidazole,
2-(3-chlorobenzyl)-4-(3,4-dichlorophenyl)imidazole,
2-(4-chlorobenzyl)-4-(2,4-dichlorophenyl)imidazole,
2-(4-chlorobenzyl)-4-(3,4-dichlorophenyl)imidazole,
2-(4-chlorobenzyl)-4-(2,4-dibromophenyl)imidazole,
4-(2,4-dichlorophenyl)-2-(4-methylbenzyl)-5-methylimidazole,
2-(2,3-dichlorobenzyl)-4-phenylimidazole,
2-(2,4-dichlorobenzyl)-4-phenylimidazole,
2-(2,5-dichlorobenzyl)-4-phenylimidazole,
2-(2,6-dichlorobenzyl)-4-phenylimidazole,
2-(3,4-dichlorobenzyl)-4-phenylimidazole,
2-(3,5-dichlorobenzyl)-4-phenylimidazole,
4-(2-chlorophenyl)-2-(2,4-dichlorobenzyl)imidazole,
4-(2-chlorophenyl)-2-(3,4-dichlorobenzyl)imidazole,
4-(3-chlorophenyl)-2-(2,4-dichlorobenzyl)imidazole,
4-(3-chlorophenyl)-2-(3,4-dichlorobenzyl)imidazole,
4-(4-chlorophenyl)-2-(2,4-dichlorobenzyl)imidazole,
4-(4-chlorophenyl)-2-(3,4-dichlorobenzyl)imidazole,
4-(4-bromophenyl)-2-(2,4-dichlorobenzyl)imidazole,
4-(4-biphenyl)-2-(2,4-dichlorobenzyl)imidazole,
2-(2,3-dichlorobenzyl)-4-(2,4-dichlorophenyl)imidazole,
2-(2,4-dichlorobenzyl)-4-(2,4-dichlorophenyl)imidazole,
2-(2,5-dichlorobenzyl)-4-(2,4-dichlorophenyl)imidazole,
2-(2,6-dichlorobenzyl)-4-(2,4-dichlorophenyl)imidazole,
2-(3,4-dichlorobenzyl)-4-(2,4-dichlorophenyl)imidazole,
2-(3,5-dichlorobenzyl)-4-(2,4-dichlorophenyl)imidazole,
2-(2,3-dichlorobenzyl)-4-(3,4-dichlorophenyl)imidazole,
2-(2,4-dichlorobenzyl)-4-(3,4-dichlorophenyl)imidazole,
2-(2,5-dichlorobenzyl)-4-(3,4-dichlorophenyl)imidazole,
2-(2,6-dichlorobenzyl)-4-(3,4-dichlorophenyl)imidazole,
2-(3,4-dichlorobenzyl)-4-(3,4-dichlorophenyl)imidazole,
2-(3,5-dichlorobenzyl)-4-(3,4-dichlorophenyl)imidazole,
4-phenyl-2-(3,4,5-trichlorobenzyl)imidazole,
2-(4-chlorobenzyl)-5-methyl-4-phenylimidazole,
2-(4-chlorobenzyl)-4-(4-chlorophenyl)-5-methylimidazole,
2-(4-bromobenzyl)-4-(4-bromophenyl)-5-methylimidazole,
2-(2-chlorobenzyl)-4-(2,4-dichlorophenyl)-5-methylimidazole,
2-(2-chlorobenzyl)-4-(3,4-dichlorophenyl)-5-methylimidazole,
2-(3-chlorobenzyl)-4-(2,4-dichlorophenyl)-5-methylimidazole,
2-(3-chlorobenzyl)-4-(3,4-dichlorophenyl)-5-methylimidazole,
2-(4-chlorobenzyl)-4-(2,4-dichlorophenyl)-5-methylimidazole,
2-(4-chlorobenzyl)-4-(3,4-dichlorophenyl)-5-methylimidazole,
2-(4-chlorobenzyl)-4-(2,4-dibromophenyl)-5-methylimidazole,
4-(2,4-dichlorophenyl)-2-(4-fluorobenzyl)-5-methylimidazole,
4-(3,4-dichlorophenyl)-2-(4-fluorobenzyl)-5-methylimidazole,
2-(4-bromobenzyl)-4-(2,4-dichlorophenyl)-5-methylimidazole,
2-(4-bromobenzyl)-4-(3,4-dichlorophenyl)-5-methylimidazole,
2-(2,4-dichlorobenzyl)-5-methyl-4-phenylimidazole,
2-(3,4-dichlorobenzyl)-5-methyl-4-phenylimidazole,
4-(2-chlorophenyl)-2-(2,4-dichlorobenzyl)-5-methylimidazole,
4-(2-chlorophenyl)-2-(3,4-dichlorobenzyl)-5-methylimidazole,
4-(3-chlorophenyl)-2-(2,4-dichlorobenzyl)-5-methylimidazole,
4-(3-chlorophenyl)-2-(3,4-dichlorobenzyl)-5-methylimidazole,
4-(4-chlorophenyl)-2-(2,4-dichlorobenzyl)-5-methylimidazole,
4-(4-chlorophenyl)-2-(3,4-dichlorobenzyl)-5-methylimidazole,
2-(2,4-dichlorobenzyl)-5-methyl-4-(4-methylphenyl)imidazole,
2-(2,4-dichlorobenzyl)-4-(4-methoxyphenyl)-5-methylimidazole,
2-(2,3-dichlorobenzyl)-4-(2,4-dichlorophenyl)-5-methylimidazole,
2-(2,4-dichlorobenzyl)-4-(2,4-dichlorophenyl)-5-methylimidazole,
2-(2,6-dichlorobenzyl)-4-(2,4-dichlorophenyl)-5-methylimidazole,
2-(3,4-dichlorobenzyl)-4-(2,4-dichlorophenyl)-5-methylimidazole,
2-(2,4-dichlorobenzyl)-4-(3,4-dichlorophenyl)-5-methylimidazole,
2-(3,4-dichlorobenzyl)-4-(3,4-dichlorophenyl)-5-methylimidazole,
2-(2,4-dibromobenzyl)-4-(3,4-dibromophenyl)-5-methylimidazole,
4-(2,4-dichlorophenyl)-2-(3,4-dimethoxybenzyl)-5-methylimidazole,
4-(3-chloro-4-methylphenyl)-2-(2,4-dichlorobenzyl)-5-methylimidazole,
2-(2-chlorobenzyl)-4,5-diphenylimidazole,
2-(3-chlorobenzyl)-4,5-diphenylimidazole,
2-(4-chlorobenzyl)-4,5-diphenylimidazole,
2-(2,4-dichlorobenzyl)-4,5-diphenylimidazole,
2-(2,4-dichlorobenzyl)-5-hexyl-4-phenylimidazole,
2-(2-chlorobenzyl)-4-(1-naphthyl)imidazole,
2-(2-chlorobenzyl)-4-(2-naphthyl)imidazole,
2-(3-chlorobenzyl)-4-(1-naphthyl)imidazole,
2-(3-chlorobenzyl)-4-(2-naphthyl)imidazole,
2-(4-chlorobenzyl)-4-(1-naphthyl)imidazole,
2-(4-chlorobenzyl)-4-(2-naphthyl)imidazole,
2-(2,3-dichlorobenzyl)-4-(1-naphthyl)imidazole,
2-(2,3-dichlorobenzyl)-4-(2-naphthyl)imidazole,
2-(2,4-dichlorobenzyl)-4-(1-naphthyl)imidazole,
2-(2,4-dichlorobenzyl)-4-(2-naphthyl)imidazole,
2-(2,5-dichlorobenzyl)-4-(1-naphthyl)imidazole,
2-(2,5-dichlorobenzyl)-4-(2-naphthyl)imidazole,
2-(2,6-dichlorobenzyl)-4-(1-naphthyl)imidazole,
2-(2,6-dichlorobenzyl)-4-(2-naphthyl)imidazole,
2-(3,4-dichlorobenzyl)-4-(1-naphthyl)imidazole,
2-(3,4-dichlorobenzyl)-4-(2-naphthyl)imidazole,
2-(3,5-dichlorobenzyl)-4-(1-naphthyl)imidazole, and
2-(3,5-dichlorobenzyl)-4-(2-naphthyl)imidazole.

Examples of the imidazole compound represented by Formula (I-5) include:
2-(1-naphthylmethyl)-4-phenylimidazole,
2-(2-naphthylmethyl)-4-phenylimidazole,
4-(2-chlorophenyl)-2-(1-naphthylmethyl)imidazole,
4-(2-chlorophenyl)-2-(2-naphthylmethyl)imidazole,
4-(3-chlorophenyl)-2-(1-naphthylmethyl)imidazole,
4-(3-chlorophenyl)-2-(2-naphthylmethyl)imidazole,
4-(4-chlorophenyl)-2-(1-naphthylmethyl)imidazole,
4-(4-chlorophenyl)-2-(2-naphthylmethyl)imidazole,
4-(2,3-dichlorophenyl)-2-(1-naphthylmethyl)imidazole,
4-(2,3-dichlorophenyl)-2-(2-naphthylmethyl)imidazole,
4-(2,4-dichlorophenyl)-2-(1-naphthylmethyl)imidazole,
4-(2,4-dichlorophenyl)-2-(2-naphthylmethyl)imidazole,
4-(2,5-dichlorophenyl)-2-(1-naphthylmethyl)imidazole,
4-(2,5-dichlorophenyl)-2-(2-naphthylmethyl)imidazole,
4-(2,6-dichlorophenyl)-2-(1-naphthylmethyl)imidazole,
4-(2,6-dichlorophenyl)-2-(2-naphthylmethyl)imidazole,
4-(3,4-dichlorophenyl)-2-(1-naphthylmethyl)imidazole,
4-(3,4-dichlorophenyl)-2-(2-naphthylmethyl)imidazole,
4-(3,5-dichlorophenyl)-2-(1-naphthylmethyl)imidazole,
4-(3,5-dichlorophenyl)-2-(2-naphthylmethyl)imidazole,
5-methyl-2-(1-naphthylmethyl)-4-phenylimidazole,
5-methyl-2-(2-naphthylmethyl)-4-phenylimidazole,
4-(2-chlorophenyl)-5-methyl-2-(1-naphthylmethyl)imidazole,
4-(2-chlorophenyl)-5-methyl-2-(2-naphthylmethyl)imidazole,
4-(3-chlorophenyl)-5-methyl-2-(1-naphthylmethyl)imidazole,
4-(3-chlorophenyl)-5-methyl-2-(2-naphthylmethyl)imidazole,
4-(4-chlorophenyl)-5-methyl-2-(1-naphthylmethyl)imidazole,
4-(4-chlorophenyl)-5-methyl-2-(2-naphthylmethyl)imidazole,
4-(2,3-dichlorophenyl)-5-methyl-2-(1-naphthylmethyl)imidazole,
4-(2,3-dichlorophenyl)-5-methyl-2-(2-naphthylmethyl)imidazole,
4-(2,4-dichlorophenyl)-5-methyl-2-(1-naphthylmethyl)imidazole,
4-(2,4-dichlorophenyl)-5-methyl-2-(2-naphthylmethyl)imidazole,
4-(2,5-dichlorophenyl)-5-methyl-2-(1-naphthylmethyl)imidazole,
4-(2,5-dichlorophenyl)-5-methyl-2-(2-naphthylmethyl)imidazole,
4-(2,6-dichlorophenyl)-5-methyl-2-(1-naphthylmethyl)imidazole,
4-(2,6-dichlorophenyl)-5-methyl-2-(2-naphthylmethyl)imidazole,
4-(3,4-dichlorophenyl)-5-methyl-2-(1-naphthylmethyl)imidazole,
4-(3,4-dichlorophenyl)-5-methyl-2-(2-naphthylmethyl)imidazole,
4-(3,5-dichlorophenyl)-5-methyl-2-(1-naphthylmethyl)imidazole, and
4-(3,5-dichlorophenyl)-5-methyl-2-(2-naphthylmethyl)imidazole.

Examples of the imidazole compound represented by Formula (I-6) include:
4-phenyl-2-(2-thienyl)imidazole,
4-phenyl-2-(3-thienyl)imidazole,
4-(2-chlorophenyl)-2-(2-thienyl)imidazole,
4-(2-chlorophenyl)-2-(3-thienyl)imidazole,
4-(3-chlorophenyl)-2-(2-thienyl)imidazole,
4-(3-chlorophenyl)-2-(3-thienyl)imidazole,
4-(4-chlorophenyl)-2-(2-thienyl)imidazole,
4-(4-chlorophenyl)-2-(3-thienyl)imidazole,
4-(2,3-dichlorophenyl)-2-(2-thienyl)imidazole,
4-(2,3-dichlorophenyl)-2-(3-thienyl)imidazole,
4-(2,4-dichlorophenyl)-2-(2-thienyl)imidazole,
4-(2,4-dichlorophenyl)-2-(3-thienyl)imidazole,
4-(2,5-dichlorophenyl)-2-(2-thienyl)imidazole,
4-(2,5-dichlorophenyl)-2-(3-thienyl)imidazole,
4-(2,6-dichlorophenyl)-2-(2-thienyl)imidazole,
4-(2,6-dichlorophenyl)-2-(3-thienyl)imidazole,
4-(3,4-dichlorophenyl)-2-(2-thienyl)imidazole,
4-(3,4-dichlorophenyl)-2-(3-thienyl)imidazole,
4-(3,5-dichlorophenyl)-2-(2-thienyl)imidazole,
4-(3,5-dichlorophenyl)-2-(3-thienyl)imidazole,
4-(1-naphthyl)-2-(2-thienyl)imidazole,
4-(1-naphthyl)-2-(3-thienyl)imidazole,
4-(2-naphthyl)-2-(2-thienyl)imidazole,
4-(2-naphthyl)-2-(3-thienyl)imidazole,
5-methyl-4-phenyl-2-(2-thienyl)imidazole,
5-methyl-4-phenyl-2-(3-thienyl)imidazole,
4-(2-chlorophenyl)-5-methyl-2-(2-thienyl)imidazole,
4-(2-chlorophenyl)-5-methyl-2-(3-thienyl)imidazole,
4-(3-chlorophenyl)-5-methyl-2-(2-thienyl)imidazole,
4-(3-chlorophenyl)-5-methyl-2-(3-thienyl)imidazole,
4-(4-chlorophenyl)-5-methyl-2-(2-thienyl)imidazole,
4-(4-chlorophenyl)-5-methyl-2-(3-thienyl)imidazole,
4-(2,3-dichlorophenyl)-5-methyl-2-(2-thienyl)imidazole,
4-(2,3-dichlorophenyl)-5-methyl-2-(3-thienyl)imidazole,
4-(2,4-dichlorophenyl)-5-methyl-2-(2-thienyl)imidazole,
4-(2,4-dichlorophenyl)-5-methyl-2-(3-thienyl)imidazole,
4-(2,5-dichlorophenyl)-5-methyl-2-(2-thienyl)imidazole,
4-(2,5-dichlorophenyl)-5-methyl-2-(3-thienyl)imidazole,
4-(2,6-dichlorophenyl)-5-methyl-2-(2-thienyl)imidazole,
4-(2,6-dichlorophenyl)-5-methyl-2-(3-thienyl)imidazole,
4-(3,4-dichlorophenyl)-5-methyl-2-(2-thienyl)imidazole,
4-(3,4-dichlorophenyl)-5-methyl-2-(3-thienyl)imidazole,
4-(3,5-dichlorophenyl)-5-methyl-2-(2-thienyl)imidazole,
4-(3,5-dichlorophenyl)-5-methyl-2-(3-thienyl)imidazole,
5-methyl-4-(1-naphthyl)-2-(2-thienyl)imidazole,
5-methyl-4-(1-naphthyl)-2-(3-thienyl)imidazole,
5-methyl-4-(2-naphthyl)-2-(2-thienyl)imidazole,
5-methyl-4-(2-naphthyl)-2-(3-thienyl)imidazole,
4,5-diphenyl-2-(2-thienyl)imidazole,
4,5-diphenyl-2-(3-thienyl)imidazole,
4-(2-chlorophenyl)-5-phenyl-2-(2-thienyl)imidazole,
4-(2-chlorophenyl)-5-phenyl-2-(3-thienyl)imidazole,
4-(3-chlorophenyl)-5-phenyl-2-(2-thienyl)imidazole,
4-(3-chlorophenyl)-5-phenyl-2-(3-thienyl)imidazole,
4-(4-chlorophenyl)-5-phenyl-2-(2-thienyl)imidazole,
4-(4-chlorophenyl)-5-phenyl-2-(3-thienyl)imidazole,
4-(2,3-dichlorophenyl)-5-phenyl-2-(2-thienyl)imidazole,
4-(2,3-dichlorophenyl)-5-phenyl-2-(3-thienyl)imidazole,
4-(2,4-dichlorophenyl)-5-phenyl-2-(2-thienyl)imidazole,
4-(2,4-dichlorophenyl)-5-phenyl-2-(3-thienyl)imidazole,
4-(2,5-dichlorophenyl)-5-phenyl-2-(2-thienyl)imidazole,
4-(2,5-dichlorophenyl)-5-phenyl-2-(3-thienyl)imidazole,
4-(2,6-dichlorophenyl)-5-phenyl-2-(2-thienyl)imidazole,
4-(2,6-dichlorophenyl)-5-phenyl-2-(3-thienyl)imidazole,
4-(3,4-dichlorophenyl)-5-phenyl-2-(2-thienyl)imidazole,
4-(3,4-dichlorophenyl)-5-phenyl-2-(3-thienyl)imidazole,
4-(3,5-dichlorophenyl)-5-phenyl-2-(2-thienyl)imidazole,
4-(3,5-dichlorophenyl)-5-phenyl-2-(3-thienyl)imidazole,
4-(1-naphthyl)-5-phenyl-2-(2-thienyl)imidazole,
4-(1-naphthyl)-5-phenyl-2-(3-thienyl)imidazole,
4-(2-naphthyl)-5-phenyl-2-(2-thienyl)imidazole, and
4-(2-naphthyl)-5-phenyl-2-(3-thienyl)imidazole.

In addition, specific examples of the imidazole compound represented by Formula (I) include:
5-cyclohexyl-2,4-diphenylimidazole,
5-cyclohexyl-2-(2,4-dichlorobenzyl)-4-phenylimidazole,
2-(3,6-dichloro-2-naphthyl)-4-(2-isopropyl-5-fluorophenyl)-5-decylimidazole,
4-phenyl-2-(2-thienylmethyl)imidazole,
4-phenyl-2-(3-thienylmethyl)imidazole,
4-(2-chlorophenyl)-2-(2-thienylmethyl)imidazole,
4-(2-chlorophenyl)-2-(3-thienylmethyl)imidazole,
4-(3-chlorophenyl)-2-(2-thienylmethyl)imidazole,
4-(3-chlorophenyl)-2-(3-thienylmethyl)imidazole,
4-(4-chlorophenyl)-2-(2-thienylmethyl)imidazole,
4-(4-chlorophenyl)-2-(3-thienylmethyl)imidazole,
4-(2,3-dichlorophenyl)-2-(2-thienylmethyl)imidazole,
4-(2,3-dichlorophenyl)-2-(3-thienylmethyl)imidazole,
4-(2,4-dichlorophenyl)-2-(2-thienylmethyl)imidazole,
4-(2,4-dichlorophenyl)-2-(3-thienylmethyl)imidazole,
4-(2,5-dichlorophenyl)-2-(2-thienylmethyl)imidazole,
4-(2,5-dichlorophenyl)-2-(3-thienylmethyl)imidazole,
4-(2,6-dichlorophenyl)-2-(2-thienylmethyl)imidazole,
4-(2,6-dichlorophenyl)-2-(3-thienylmethyl)imidazole,
4-(3,4-dichlorophenyl)-2-(2-thienylmethyl)imidazole,
4-(3,4-dichlorophenyl)-2-(3-thienylmethyl)imidazole,
4-(3,5-dichlorophenyl)-2-(2-thienylmethyl)imidazole,
4-(3,5-dichlorophenyl)-2-(3-thienylmethyl)imidazole,
4-(1-naphthyl)-2-(2-thienylmethyl)imidazole,
4-(1-naphthyl)-2-(3-thienylmethyl)imidazole,
4-(2-naphthyl)-2-(2-thienylmethyl)imidazole,
4-(2-naphthyl)-2-(3-thienylmethyl)imidazole,
5-methyl-4-phenyl-2-(2-thienylmethyl)imidazole,
5-methyl-4-phenyl-2-(3-thienylmethyl)imidazole,
4-(2-chlorophenyl)-5-methyl-2-(2-thienylmethyl)imidazole,
4-(2-chlorophenyl)-5-methyl-2-(3-thienylmethyl)imidazole,
4-(3-chlorophenyl)-5-methyl-2-(2-thienylmethyl)imidazole,
4-(3-chlorophenyl)-5-methyl-2-(3-thienylmethyl)imidazole,
4-(4-chlorophenyl)-5-methyl-2-(2-thienylmethyl)imidazole,
4-(4-chlorophenyl)-5-methyl-2-(3-thienylmethyl)imidazole,
4-(2,3-dichlorophenyl)-5-methyl-2-(2-thienylmethyl)imidazole,
4-(2,3-dichlorophenyl)-5-methyl-2-(3-thienylmethyl)imidazole,
4-(2,4-dichlorophenyl)-5-methyl-2-(2-thienylmethyl)imidazole,
4-(2,4-dichlorophenyl)-5-methyl-2-(3-thienylmethyl)imidazole,
4-(2,5-dichlorophenyl)-5-methyl-2-(2-thienylmethyl)imidazole,
4-(2,5-dichlorophenyl)-5-methyl-2-(3-thienylmethyl)imidazole,
4-(2,6-dichlorophenyl)-5-methyl-2-(2-thienylmethyl)imidazole,
4-(2,6-dichlorophenyl)-5-methyl-2-(3-thienylmethyl)imidazole,
4-(3,4-dichlorophenyl)-5-methyl-2-(2-thienylmethyl)imidazole,
4-(3,4-dichlorophenyl)-5-methyl-2-(3-thienylmethyl)imidazole,
4-(3,5-dichlorophenyl)-5-methyl-2-(2-thienylmethyl)imidazole,
4-(3,5-dichlorophenyl)-5-methyl-2-(3-thienylmethyl)imidazole,
5-methyl-4-(1-naphthyl)-2-(2-thienylmethyl)imidazole,
5-methyl-4-(1-naphthyl)-2-(3-thienylmethyl)imidazole,
5-methyl-4-(2-naphthyl)-2-(2-thienylmethyl)imidazole,
5-methyl-4-(2-naphthyl)-2-(3-thienylmethyl)imidazole,
4,5-diphenyl-2-(2-thienylmethyl)imidazole,
4,5-diphenyl-2-(3-thienylmethyl)imidazole,
4-(2-chlorophenyl)-5-phenyl-2-(2-thienylmethyl)imidazole,
4-(2-chlorophenyl)-5-phenyl-2-(3-thienylmethyl)imidazole,
4-(3-chlorophenyl)-5-phenyl-2-(2-thienylmethyl)imidazole,
4-(3-chlorophenyl)-5-phenyl-2-(3-thienylmethyl)imidazole,
4-(4-chlorophenyl)-5-phenyl-2-(2-thienylmethyl)imidazole,
4-(4-chlorophenyl)-5-phenyl-2-(3-thienylmethyl)imidazole,
4-(2,3-dichlorophenyl)-5-phenyl-2-(2-thienylmethyl)imidazole,
4-(2,3-dichlorophenyl)-5-phenyl-2-(3-thienylmethyl)imidazole,
4-(2,4-dichlorophenyl)-5-phenyl-2-(2-thienylmethyl)imidazole,
4-(2,4-dichlorophenyl)-5-phenyl-2-(3-thienylmethyl)imidazole,
4-(2,5-dichlorophenyl)-5-phenyl-2-(2-thienylmethyl)imidazole,
4-(2,5-dichlorophenyl)-5-phenyl-2-(3-thienylmethyl)imidazole,
4-(2,6-dichlorophenyl)-5-phenyl-2-(2-thienylmethyl)imidazole,
4-(2,6-dichlorophenyl)-5-phenyl-2-(3-thienylmethyl)imidazole,
4-(3,4-dichlorophenyl)-5-phenyl-2-(2-thienylmethyl)imidazole,
4-(3,4-dichlorophenyl)-5-phenyl-2-(3-thienylmethyl)imidazole,
4-(3,5-dichlorophenyl)-5-phenyl-2-(2-thienylmethyl)imidazole,
4-(3,5-dichlorophenyl)-5-phenyl-2-(3-thienylmethyl)imidazole,
4-(1-naphthyl)-5-phenyl-2-(2-thienylmethyl)imidazole,
4-(1-naphthyl)-5-phenyl-2-(3-thienylmethyl)imidazole,
4-(2-naphthyl)-5-phenyl-2-(2-thienylmethyl)imidazole, and
4-(2-naphthyl)-5-phenyl-2-(3-thienylmethyl)imidazole.

### (Benzimidazole compound represented by Formula (II)

The benzimidazole compound represented by Formula (II) (hereinafter, may be referred to as a benzimidazole compound (II)) has the following structure.

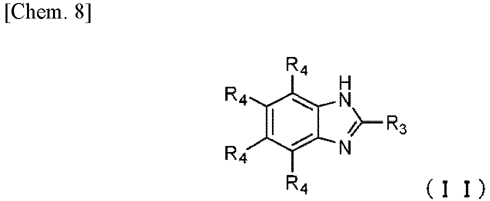

(In Formula (II), R₃ represents a linear or branched alkyl group having 1 to 18 carbon atoms, - (CH₂)ₘ-Ph, -(CH₂)ₘ-Np, or a group represented by Formula (1), where Ph represents a phenyl group which may have a substituent, Np represents a naphthyl group which may have a substituent, and m represents an integer of 1 to 5.

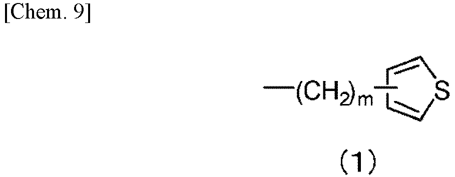

(In Formula (1), m represents an integer of 1 to 5.)

R₄'s are the same as or different from each other and each represent a hydrogen atom, a linear or branched alkyl group having 1 to 18 carbon atoms, a nitro group, or a halogen atom.)

In Formula (II), R₃ represents a linear or branched alkyl group having 1 to 18 carbon atoms, - (CH₂)ₘ-Ph (Ph is a phenyl group which may have a substituent, and m is an integer of 1 to 5), -(CH₂)ₘ-Np (Np is a naphthyl group which may have a substituent, and m is an integer of 1 to 5), or a group represented by Formula (1).

The linear alkyl group and branched alkyl group having 1 to 18 carbon atoms are the same as those described for the imidazole compound (I).

In addition, the substituent to be substituted with hydrogen of the phenyl group or the naphthyl group is also the same as those described for the imidazole compound (I).

R₄ represents a hydrogen atom, a linear or branched alkyl group having 1 to 18 carbon atoms, a nitro group, or a halogen atom. The linear alkyl group and branched alkyl group having 1 to 18 carbon atoms, are the same as those described for the imidazole compound (I). Examples of the halogen atom include a fluorine atom (F), a chlorine atom (Cl), a bromine atom (Br), and an iodine atom (I). Four R₄'s may be the same as or different from each other.

From a viewpoint of the heat resistance of the chemical conversion coating, R₄ is preferably a hydrogen atom, a linear or branched alkyl group having 1 to 18 carbon atoms, or a halogen atom, and more preferably a hydrogen atom, a methyl group, or a chlorine atom (Cl).

The benzimidazole compound represented by Formula (II) (the benzimidazole compound (II)) is preferably benzimidazole compounds represented by Formula (II-1) to Formula (II-4).

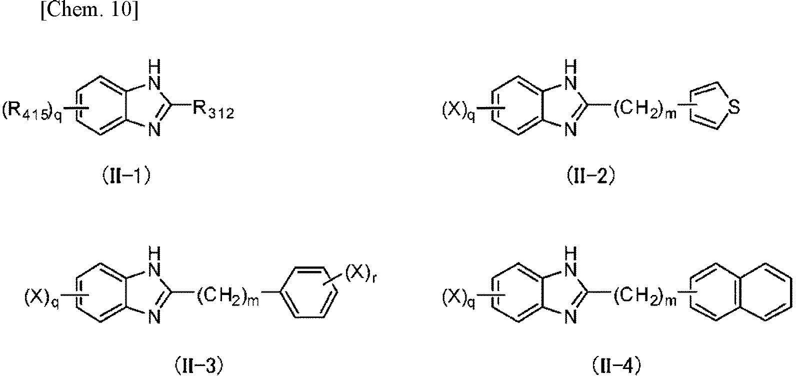

(In Formula (II-1), R₃₁₂ represents a linear or branched alkyl group having 1 to 18 carbon atoms, R₄₁₅'s are the same as or different from each other, and each represent a linear or branched alkyl group having 1 to 18 carbon atoms, or a halogen atom, and q represents an integer of 0 to 3.

In Formula (II-2), X's are the same as or different from each other, and each represent a halogen atom, m represents an integer of 1 to 5, and q represents an integer of 0 to 3.

In Formula (II-3), X's are the same as or different from each other, and each represent a halogen atom, m represents an integer of 1 to 5, q represents an integer of 0 to 3, and r represents an integer of 0 to 3.

In Formula (II-4), X's are the same as or different from each other, and each represent a halogen atom, m represents an integer of 1 to 5, and q represents an integer of 0 to 3).

As specific examples of the benzimidazole compound (II), examples of the benzimidazole compound represented by Formula (II-1) includes:
2-methylbenzimidazole,
2-ethylbenzimidazole,
2-propylbenzimidazole,
2-butylbenzimidazole,
2-tert-butylbenzimidazole,
2-pentylbenzimidazole,
2-hexylbenzimidazole,
2-heptylbenzimidazole,
2-octylbenzimidazole,
2-nonylbenzimidazole,
2-decylbenzimidazole,
2-undecylbenzimidazole,
2-dodecylbenzimidazole,
2-tridecylbenzimidazole,
2-tetradecylbenzimidazole,
2-pentadecylbenzimidazole,
2-hexadecylbenzimidazole,
2-heptadecylbenzimidazole,
2-heptyl-5,6-dimethylbenzimidazole,
2-octyl-5-chlorobenzimidazole, and
2-pentyl-5,6-dichlorobenzimidazole.

Examples of the benzimidazole compound represented by Formula (II-2) include:
2-(2-thienylmethyl)benzimidazole, and
2-(3-thienylmethyl)benzimidazole.

Examples of the benzimidazole compound represented by Formula (II-3) include:
2-(phenylmethyl)benzimidazole,
2-(4-chlorophenylmethyl)benzimidazole,
2-(2,4-dichlorophenylmethyl)benzimidazole,
2-(3,4-dichlorophenylmethyl)benzimidazole,
6-chloro-2-(3,4-dichlorophenylmethyl)benzimidazole,
2-(2-phenylethyl)benzimidazole,
2-[2-(4-chlorophenyl)ethyl]benzimidazole,
2-(3-phenylpropyl)benzimidazole,
2-[3-(2-chlorophenyl)propyl]benzimidazole,
2-(4-phenylbutyl)benzimidazole,
2-[4-(4-chlorophenyl)butyl]benzimidazole,
2-(5-phenylpentyl)benzimidazole, and
2-[4-(2,4-dichlorophenyl)butyl]-4,7-dichlorobenzimidazole.

Examples of the benzimidazole compound represented by Formula (II-4) include:
2-(1-naphthylmethyl)benzimidazole,
2-(2-naphthylmethyl)benzimidazole,
2-[2-(1-naphthyl)ethyl]benzimidazole,
2-[2-(2-naphthyl)ethyl]benzimidazole,
2-[3-(1-naphthyl)propyl]benzimidazole,
2-[3-(2-naphthyl)propyl]benzimidazole,
2-[4-(1-naphthyl)butyl]benzimidazole,
2-[4-(2-naphthyl)butyl]benzimidazole,
2-[5-(1-naphthyl)pentyl]benzimidazole, and
2-[5-(2-naphthyl)pentyl]benzimidazole.

The imidazole compound (I) or the benzimidazole compound (II) is preferably contained in a proportion of 0.01% by weight to 10% by weight, more preferably contained in a proportion of 0.05% by weight to 5% by weight, and even more preferably contained in a proportion of 0.05% by weight to 1% by weight with respect to a total amount of the surface treatment agent. In the case where the content of the imidazole compound (I) or the benzimidazole compound (II) is 0.01% by weight or more, the chemical conversion coating can be formed to have a film thickness at which oxidation of the copper surface can be prevented. In addition, in the case where the content of the imidazole compound (I) or the benzimidazole compound (II) is 10% by weight or less, the imidazole compound is easily dissolved in the surface treatment agent, and the solderability of the copper surface can be improved.

In the implementation of the present invention, it is possible to use one kind of imidazole compound selected from the group consisting of the imidazole compound (I) and the benzimidazole compound (II) alone, or a combination of two or more kinds thereof.

In addition, the imidazole compound (I) and the benzimidazole compound (II) can also be used in a state of forming a salt with an appropriate acid. Examples of the acid include HCl (hydrochloric acid), HBr (hydrogen bromide), and the like, and they can be used as HCl salt, HBr salt, and the like.

In addition, for the surface treatment agent of the present invention, known imidazole compounds in the same technical field as the present invention can also be used in combination with the imidazole compound (I) and the benzimidazole compound (II).

### (Triazole compound represented by Formula (III))

The triazole compound represented by Formula (III) (hereinafter, may be referred to as a triazole compound (III)) has the following structure.

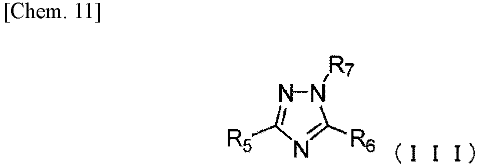

(In Formula (III), R₅ and R₆ are the same as or different from each other and each represent a hydrogen atom, a linear or branched alkyl group having 1 to 18 carbon atoms, an amino group, a phenyl group which may have a substituent, a benzyl group which may have a substituent, a naphthyl group, a pyridyl group, or a group represented by Formula (2), where the case where R₅ and R₆ are groups represented by Formula (2) at the same time is excluded.

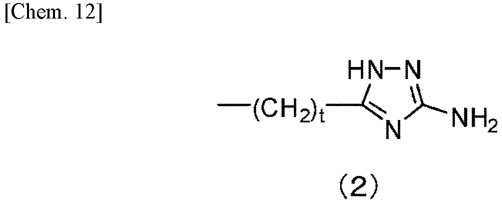

(In Formula (2), t represents an integer of 0 to 12.)

R₇ represents a hydrogen atom, a benzyl group, or -(CH₂)ₙ-COOH, and n represents an integer of 1 to 5.)

In Formula (III), R₅ and R₆ each represent a hydrogen atom, a linear or branched alkyl group having 1 to 18 carbon atoms, an amino group, a phenyl group which may have a substituent, a benzyl group which may have a substituent, a naphthyl group, a pyridyl group, or a group represented by Formula (2). R₅ and R₆ may be the same as or different from each other, but they do not serve as a group represented by Formula (2) at the same time.

The linear alkyl group and branched alkyl group having 1 to 18 carbon atoms are the same as those described for the imidazole compound (I).

In addition, the substituent to be substituted with hydrogen of the phenyl group or the benzyl group is also the same as those described for the imidazole compound (I).

From a viewpoint of the heat resistance of the chemical conversion coating, R₅ and R₆ are each preferably a hydrogen atom, a linear or branched alkyl group having 1 to 18 carbon atoms, an amino group, a phenyl group which may have a substituent, a benzyl group having a substituent, a naphthyl group, a pyridyl group, or a group represented by Formula (2). In addition, in Formula (2), t is preferably an integer of 0 to 10, more preferably an integer of 0 to 8, and even more preferably 0 to 6.

R₇ represents a hydrogen atom, a benzyl group, or -(CH₂)ₙ-COOH (n is an integer of 1 to 5).

From a viewpoint of the heat resistance of the chemical conversion coating, R₇ is preferably a hydrogen atom or -(CH₂)ₙ-COOH (n is an integer of 1 to 3).

The triazole compound represented by Formula (III) (the triazole compound (III)) is preferably triazole compounds represented by Formula (III-1) to Formula (III-5).

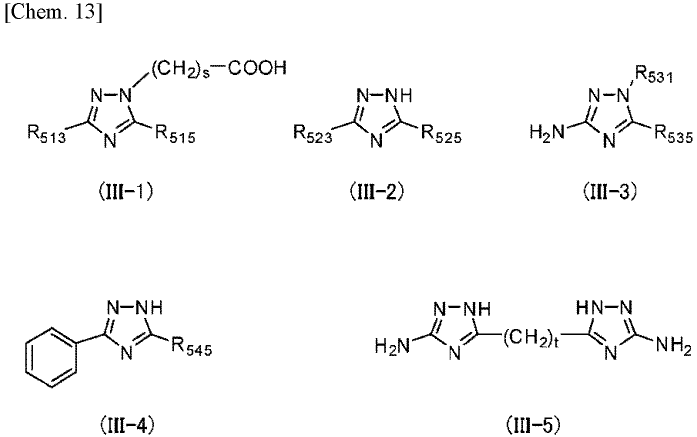

(In Formula (III-1), R₅₁₃ represents a hydrogen atom, an amino group, or a phenyl group which may have a substituent, R₅₁₅ represents a hydrogen atom, an amino group, or a phenyl group which may have a substituent, and s represents an integer of 1 to 3.

In Formula (III-2), R₅₂₃ represents a linear or branched alkyl group having 1 to 18 carbon atoms or a pyridyl group, and R₅₂₅ represents a hydrogen atom, a linear or branched alkyl group having 1 to 18 carbon atoms, a phenyl group which may have a substituent, a benzyl group which may have a substituent, or a pyridyl group.

In Formula (III-3), R₅₃₁ represents a hydrogen atom or a benzyl group which may have a substituent, and R₅₃₅ represents a hydrogen atom, a linear or branched alkyl group having 1 to 18 carbon atoms, a phenyl group which may have a substituent, a naphthyl group, or an amino group.

In Formula (III-4), R₅₄₅ represents a hydrogen atom, a phenyl group which may have a substituent, or a benzyl group which may have a substituent.

In Formula (III-5), t represents an integer of 0 to 6).

As specific examples of the triazole compound (III), examples of the triazole compound represented by Formula (III-1) includes:
1,2,4-triazole-1-acetic acid,
1,2,4-triazole-1-propionic acid,
1,2,4-triazole-1-butyric acid,
3-amino-1,2,4-triazole-1-acetic acid, and
3-amino-5-phenyl-1,2,4-triazole-1-acetic acid.

Examples of the triazole compound represented by Formula (III-2) include:
3-methyl-1,2,4-triazole,
3-ethyl-1,2,4-triazole,
3-propyl-1,2,4-triazole,
3-isopropyl-1,2,4-triazole,
3-butyl-1,2,4-triazole,
3-pentyl-1,2,4-triazole,
3-hexyl-1,2,4-triazole,
3-octyl-1,2,4-triazole,
3-undecyl-1,2,4-triazole,
3,5-dimethyl-1,2,4-triazole,
3-ethyl-5-methyl-1,2,4-triazole,
3-methyl-5-propyl-1,2,4-triazole,
3-isopropyl-5-methyl-1,2,4-triazole,
3-butyl-5-methyl-1,2,4-triazole,
3-methyl-5-pentyl-1,2,4-triazole,
5-heptyl-3-methyl-1,2,4-triazole,
5-methyl-3-octyl-1,2,4-triazole,
3-methyl-5-undecyl-1,2,4-triazole,
3,5-diethyl-1,2,4-triazole,
3,5-dipropyl-1,2,4-triazole,
3,5-diisopropyl-1,2,4-triazole,
3,5-dibutyl-1,2,4-triazole,
3,5-dipentyl-1,2,4-triazole,
3,5-diheptyl-1,2,4-triazole,
3,5-dioctyl-1,2,4-triazole,
3,5-diundecyl-1,2,4-triazole,
3-methyl-5-phenyl-1,2,4-triazole,
3-ethyl-5-phenyl-1,2,4-triazole,
5-phenyl-3-propyl-1,2,4-triazole,
3-butyl-5-phenyl-1,2,4-triazole,
3-pentyl-5-phenyl-1,2,4-triazole,
3-methyl-5-(phenylmethyl)-1 ,2,4-triazole,
3-ethyl-5-(phenylmethyl)-1,2,4-triazole,
5-(phenylmethyl)-3-propyl-1,2,4-triazole,
3-methyl-5-(4-pyridyl)-1,2,4-triazole, and
3,5-bis(4-pyridyl)-1,2,4-triazole.

Examples of the triazole compound represented by Formula (III-3) include:
3-amino-1,2,4-triazole,
3,5-diamino-1 ,2,4-triazole,
3-amino-5-methyl-1,2,4-triazole,
3-amino-5-ethyl-1,2,4-triazole,
3-amino-5-propyl-1,2,4-triazole,
3-amino-5-isopropyl-1,2,4-triazole,
3-amino-5-butyl-1,2,4-triazole,
3-amino-5-pentyl-1,2,4-triazole,
3-amino-5-phenyl-1,2,4-triazole,
3-amino-5-(1-naphthyl)-1,2,4-triazole,
3-amino-5-(2-naphthyl)-1,2,4-triazole, and
1-benzyl-3,5-diamino-1,2,4-triazole.

Examples of the triazole compound represented by Formula (III-4) include:
3-phenyl-1,2,4-triazole,
3-benzyl-5-phenyl-1,2,4-triazole, and
3,5-diphenyl-1,2,4-triazole.

Examples of the triazole compound represented by Formula (III-5) include:
3,3'-bis(5-amino-1,2,4-triazole),
3,3'-methylenebis(5-amino-1,2,4-triazole),
3,3'-ethylenebis(5-amino-1,2,4-triazole),
3,3'-trimethylenebis(5-amino-1,2,4-triazole),
3,3'-tetramethylenebis(5-amino-1,2,4-triazole),
3,3'-pentamethylenebis(5-amino-1,2,4-triazole), and
3,3'-hexamethylenebis(5-amino-1,2,4-triazole).

The triazole compound (III) is contained in a proportion of preferably 0.005% by weight to 1% by weight, more preferably 0.01% by weight to 0.5% by weight, and even more preferably 0.01% by weight to 0.3% by weight with respect to the total amount of the surface treatment agent.

In the implementation of the present invention, it is possible to use one kind or a combination of two or more kinds of the triazole compounds (III) described above, and it is also possible to use a known triazole compound in the same technical field as the present invention in combination with the triazole compound.

In the present invention, the triazole compound (III) is preferably contained in a molar ratio of 0.005 to 3.0, more preferably contained in a molar ratio of 0.01 to 2.7, and even more preferably contained in a molar ratio of 0.05 to 2.5 with respect to the imidazole compound (I) or the benzimidazole compound (II). In the case where the proportion of the triazole compound (III) and the imidazole compound (I) or the benzimidazole compound (II) is within the range described above, a chemical conversion coating having high heat resistance can be formed.

The surface treatment agent of the present invention can be prepared by dissolving the imidazole compound (I) or the benzimidazole compound (II) and the triazole compound (III) in water. As a result, a water-soluble preflux is obtained.

The water is not particularly limited, and examples thereof include tap water (water supply water), ion exchange water, purified water, and pure water.

The surface treatment agent of the present invention preferably contains a solubilizing agent in order to make it easy to dissolve (to form an aqueous solution) the imidazole compound (I) or the benzimidazole compound (II) and the triazole compound (III) in water. As the solubilizing agent, for example, an organic acid or an inorganic acid (these may be referred to as an acid) is preferably used.

Examples of the typical organic acid include formic acid, acetic acid, propionic acid, butyric acid, valeric acid, caproic acid, heptanoic acid, caprylic acid, pelargonic acid, capric acid, lauric acid, isobutyric acid, 2-ethylbutyric acid, oleic acid, glycolic acid, lactic acid, 2-hydroxybutyric acid, 3-hydroxybutyric acid, gluconic acid, glyceric acid, tartaric acid, malic acid, citric acid, chloroacetic acid, dichloroacetic acid, trichloroacetic acid, bromoacetic acid, iodoacetic acid, methoxyacetic acid, ethoxyacetic acid, propoxyacetic acid, butoxyacetic acid, 2-(2-methoxyethoxy)acetic acid, 2-[2-(2-ethoxyethoxy)ethoxy]acetic acid, 2-{2-[2-(2-ethoxyethoxy)ethoxy]ethoxy}acetic acid, 3-methoxypropionic acid, 3-ethoxypropionic acid, 3-propoxypropionic acid, 3-butoxypropionic acid, levulinic acid, glyoxylic acid, pyruvic acid, acetoacetic acid, acrylic acid, crotonic acid, oxalic acid, malonic acid, succinic acid, glutaric acid, adipic acid, maleic acid, fumaric acid, benzoic acid, p-nitrobenzoic acid, picric acid, salicylic acid, p-toluene sulfonic acid, methanesulfonic acid, and sulfamic acid. Examples of the inorganic acid include hydrochloric acid, phosphoric acid, sulfuric acid, and nitric acid.

These acids can be used alone or in combination of two or more kinds thereof.

The solubilizing agent is preferably contained in a proportion of 0.1% by weight to 50% by weight and more preferably contained in a proportion of 0.1% by weight to 40% by weight with respect to the total amount of the surface treatment agent. In the case where the proportion of the solubilizing agent is within the above-described range, the imidazole compound (I) or the benzimidazole compound (II) and the triazole compound (III) are easily dissolved in water, and a chemical conversion coating is easily formed.

In the implementation of the present invention, an organic solvent can be used in combination with the solubilizing agent.

As the organic solvent, for example, alcohols such as methanol, ethanol, n-propanol, i-propanol, n-butanol, ethylene glycol, and tetrahydrofurfuryl alcohol, cellosolves such as ethylene glycol monomethyl ether, ethylene glycol monoethyl ether, and ethylene glycol monobutyl ether, and water-miscible solvents such as acetone, N,N-dimethylformamide, and acetylacetone are preferably used.

These organic solvents can be used alone or in combination of two or more kinds thereof.

The organic solvent is contained in a proportion of preferably 0.1% by weight to 50% by weight and more preferably 1% by weight to 40% by weight with respect to the total amount of the surface treatment agent.

In order to further improve a formation speed (film forming property) of the chemical conversion coating and the heat resistance of the coating, the surface treatment agent of the present invention preferably contains a halide ion. Examples of the halide ion include a fluoride ion, a chloride ion, a bromide ion, and an iodide ion. One kind of halide ion may be used alone, or two or more kinds thereof may be used in combination. Among these, from a viewpoint of improving the heat resistance of the chemical conversion coating, the surface treatment agent more preferably contains a chloride ion.

The halide ion is contained in a proportion of preferably 0.005% by weight to 1% by weight and more preferably 0.01% by weight to 0.1% by weight with respect to the total amount of the surface treatment agent.

The halide ion can be contained by adding a halogen compound to the surface treatment agent. Examples of the halogen compound include sodium fluoride, potassium fluoride, ammonium fluoride, sodium chloride, potassium chloride, ammonium chloride, chloropropionic acid, sodium bromide, potassium bromide, ammonium bromide, bromopropionic acid, sodium iodide, potassium iodide, ammonium iodide, and iodopropionic acid. One kind of halogen compound may be used alone, or two or more kinds thereof may be used in combination.

In order to further improve the heat resistance of the formed chemical conversion coating, the surface treatment agent of the present invention preferably contains a zinc ion.

The zinc ion is contained in a proportion of preferably 0.05% by weight to 2% by weight and more preferably 0.1% by weight to 1% by weight.

The zinc ion can be contained by adding a zinc compound as an auxiliary agent to the surface treatment agent. Examples of the zinc compound include zinc oxide, zinc formate, zinc acetate, zinc oxalate, zinc lactate, zinc citrate, zinc sulfate, zinc nitrate, zinc phosphate, zinc chloride, zinc bromide, and zinc iodide. One kind of the zinc compound may be used alone, or two or more kinds thereof may be used in combination.

In order to increase the formation speed (film forming property) of the chemical conversion coating on the surface of the copper, the surface treatment agent of the present invention preferably contains a copper ion.

The copper ion is contained in a proportion of preferably 0.005% by weight to 1% by weight and more preferably 0.01% by weight to 0.1% by weight with respect to the total amount of the surface treatment agent.

The copper ion can be contained by adding a copper compound as an auxiliary agent to the surface treatment agent. Examples of the copper compound include copper formate, copper acetate, copper oxalate, cuprous chloride, cupric chloride, cuprous bromide, cupric bromide, copper iodide, copper hydroxide, copper phosphate, copper sulfate, and copper nitrate. One kind of copper compound may be used alone, or two or more kinds thereof may be used in combination.

In addition to the halogen compound, the zinc compound, and the copper compound, the surface treatment agent of the present invention may contain, as an auxiliary agent, a metal compound such as a manganese compound, a cobalt compound, and a nickel compound, and a coordination compound such as crown ether, bipyridine, porphyrin, and phenanthroline, in order to improve the film forming property of the chemical conversion coating or improve physical properties of the chemical conversion coating.

Examples of the manganese compound include manganese formate, manganese chloride, manganese oxalate, manganese sulfate, and manganese carbonate. Examples of the cobalt compound include cobalt acetate, cobalt sulfate, and cobalt nitrate. Examples of the nickel compound include nickel chloride, nickel acetate, nickel nitrate, nickel carbonate, and nickel sulfate.

For these metal compounds, one kind or a combination of two or more kinds can be used, and the metal compounds are contained in a proportion of preferably 0.05% by weight to 2% by weight and more preferably 0.1% by weight to 1% by weight with respect to the total amount of the surface treatment agent. Even for the coordination compounds, one kind or a combination of two or more kinds can be used, and the coordination compounds are contained in a proportion of preferably 0.05% by weight to 2% by weight and more preferably 0.1% by weight to 1% by weight with respect to the total amount of the surface treatment agent.

In order to improve the film forming property of the chemical conversion coating on the surface of the copper while suppressing the formation of the chemical conversion coating on a surface of gold (Au), the surface treatment agent of the present invention may contain, as an auxiliary agent, a chelating agent and/or an iron compound (see JP H09-291372A, all of which are incorporated by reference herein).

Examples of the chelating agent include iminodiacetic acid, nitrilotriacetic acid, ethylenediamine tetraacetic acid, diethylenetriamine pentaacetic acid, triethylenetetramine hexacetic acid, 1,2-diaminocyclohexane tetraacetic acid, glycol ether diamine tetraacetic acid, N,N-bis(2-hydroxybenzyl)ethylenediamine diacetic acid, ethylenediamine dipropionic acid, ethylenediamine diacetic acid, diaminopropanol tetraacetic acid, hexamethylenediamine tetraacetic acid, hydroxyethyliminodiacetic acid, diaminopropane tetraacetic acid, nitrilotripropionic acid, ethylenediamine-N,N'-disuccinic acid, ethylenediamine tetrakis methylenephosphonic acid, nitrilotris(methylenephosphonic acid), and 2-phosphonobutane-1,2,4-tricarboxylic acid and salts thereof.

The chelating agent is preferably contained in a proportion of 0.01% by weight to 0.4% by weight.

From a viewpoint of film forming property (formation speed) of the chemical conversion coating, the surface treatment agent of the present invention has a pH of preferably 2.0 to 5.0, more preferably 2.2 to 4.8, and even more preferably 2.5 to 4.5.

For decreasing the pH of the surface treatment agent, the organic acid or inorganic acid described above can be used; whereas for increasing the pH, a base can be used. Examples of the base include amines such as ammonia, monoethanolamine, diethanolamine, triethanolamine, and triisopropanolamine, in addition to sodium hydroxide and potassium hydroxide. As the base, a substance having a buffering action, such as amines, can be preferably used.

By bringing the surface treatment agent of the present invention into contact with a surface of the copper, a chemical conversion coating can be formed on the surface of the copper.

As conditions for treating the surface of the copper by the surface treatment agent of the present invention, it is preferable to set a liquid temperature of the surface treatment agent in a range of 10°C to 70°C and to set a contact time in a range of 1 second to 10 minutes. Examples of a method of bringing the copper into contact with the surface treatment agent for treating the surface of the copper include means such as immersion, spraying, and coating.

After bringing the surface treatment agent into contact with the surface of the copper, it is preferable to perform washing with water as necessary and then dry the surface of the copper. The drying is preferably performed at a temperature of room temperature (for example, 20°C) to 150°C, preferably at a temperature of 60°C to 120°C, for a time of about 1 second to 10 minutes, preferably about 10 seconds to 3 minutes. As the water used for washing with water, pure water such as ion exchange water, distilled water, and purified water is preferable. The method and the time of the washing with water are not particularly limited, and may be an appropriate time by a method such as a spray method and an immersion method.

Before bringing the surface treatment agent into contact with the surface of the copper, a pre-dip liquid containing an azole compound may be brought into contact with the surface of the copper. This pre-dip liquid has a function of enhancing the film forming property of the chemical conversion coating formed on the surface of the copper.

The azole compound is not particularly limited, and examples thereof include a commercially available imidazole compound, triazole compound, and tetrazole compound.

The pre-dip liquid contains water and an additive in addition to the azole compound. The additive may contain, for example, the organic solvent, the amines, the copper compound, the halogen compound, which are described above, and other additives (for example, ammonium salts such as ammonium sulfate, ammonium formate, ammonium acetate, ammonium chloride, ammonium carbonate, and ammonium nitrate).

A film thickness of the chemical conversion coating (OSP film) formed by the surface treatment agent of the present invention is preferably 0.10 to 0.50 µm. In the case where the film thickness of the coating is 0.10 µm or more, sufficient heat resistance can be imparted, and thus the desired effects of the present invention can be obtained. In addition, in the case where the film thickness of the coating is 0.50 µm or less, excellent solderability can be maintained.

Examples of the solder used in the implementation of the present invention include lead-free solder such as Sn-Ag-Cu-based solder, Sn-Ag-Bi-based solder, Sn-Bi-based solder, Sn-Ag-Bi-In-based solder, Sn-Zn-based solder, and Sn-Cu-based solder, in addition to Sn-Pb-based eutectic solder known in the related art.

In addition, a soldering method of the present invention can be applied to a flow method of moving a printed wiring board, on which an electronic component is mounted, while bringing it into contact with a liquid level of molten solder in a solder bath to solder the electronic component to a bonding portion of the printed wiring board, or a reflow method of printing a paste-form cream solder on a printed wiring board in advance in accordance with a circuit pattern, mounting an electronic component thereon, heating the printed wiring board to melt the solder, and performing the soldering.

### EXAMPLES

Hereinafter, the present invention will be specifically described with reference to Examples and Comparative Examples, but the present invention is not limited thereto.

### [Imidazole compound]

Imidazole compounds used in Examples are as follows.

### (Synthesis Example 1)

### <Synthesis of 4-(3,4-dichlorophenyl)-5-methyl-2-nonylimidazole (A-1)>

An imidazole compound "4-(3,4-dichlorophenyl)-5-methyl-2-nonylimidazole" (may be abbreviated as "A-1") was synthesized in accordance with a method described in JP2010-77071A.

### (Synthesis Example 2)

### <Synthesis of 2-phenyl-4-(1-naphthyl)-5-methylimidazole (A-2)>

An imidazole compound "2-phenyl-4-(1-naphthyl)-5-methylimidazole" (may be abbreviated as "A-2") was synthesized in accordance with a method described in JP2006-36683A.

### (Synthesis Example 3)

### <Synthesis of 5-methyl-4-phenyl-2-(2-thienyl)imidazole (A-3)>

An imidazole compound "5-methyl-4-phenyl-2-(2-thienyl)imidazole" (may be abbreviated as "A-3") was synthesized in accordance with a method described in JP2014-37370A.

### (Synthesis Example 4)

### <Synthesis of 2-(3-chlorobenzyl)-4-(1-naphthyl)imidazole (A-4)>

An imidazole compound "2-(3-chlorobenzyl)-4-(1-naphthyl)imidazole" (may be abbreviated as "A-4") was synthesized in accordance with a method described in JP2010-90105A.

Chemical formulae of the imidazole compounds A-1 to A-4 are shown below.

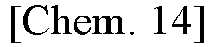

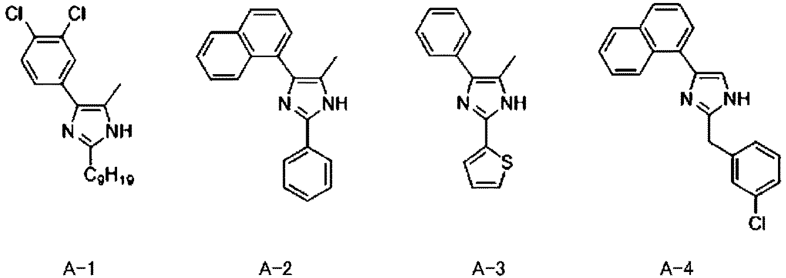

### [Benzimidazole compound]

Benzimidazole compounds used in Examples are as follows.

### (Synthesis Example 5)

### <Synthesis of 2-nonylbenzimidazole (B-1)>

A benzimidazole compound "2-nonylbenzimidazole" (may be abbreviated as "B-1") was synthesized in accordance with a method described in JP H05-107814A.

### (Synthesis Example 6)

### <Synthesis of 6-chloro-2-(3,4-dichlorophenylmethyl)benzimidazole (B-2)>

A benzimidazole compound "6-chloro-2-(3,4-dichlorophenylmethyl)benzimidazole" (may be abbreviated as "B-2") was synthesized by the following method.

To a mixture of 133.0 g (0.715 mol) of 3,4-dichlorobenzyl cyanide and 190 g of dehydrated dichloromethane was added 36.4 g (0.790 mol) of dehydrated ethanol. While stirring under ice cooling, 29.6 g (0.812 mol) of a hydrogen chloride gas was gradually blown thereinto, and then the obtained mixture was stirred overnight at 5°C or lower. The obtained product was concentrated under a reduced pressure, thereby obtaining 192.1 g (0.715 mol, yield: 100%) of white powdery ethyl 2-(3,4-dichlorophenyl)ethanecarboxyimidate hydrochloride.

To a mixture of 25.4 g (0.178 mol) of 4-chloro-1,2-phenylenediamine and 200 mL of dehydrated methanol was added 48.0 g (0.179 mol) of the ethyl 2-(3,4-dichlorophenyl)ethanecarboxyimidate hydrochloride. After stirring under reflux for 2 hours, 23.6 g of 25% aqueous ammonia was further added thereto, followed by a vacuum concentration, to obtain 76.4 g of a black-brown tar-like product. This product was stirred in hot water, the obtained solid was hot-filtered and pulverized with a mortar, 400 mL of water was added thereto, and the mixture was heated, then cooled to crystallization, and filtered to obtain black-violet crystals. Methanol and activated carbon were added thereto, followed by heating, stirring, and then filtration, the obtained filtrate was concentrated under a reduced pressure, and the obtained product was recrystallized with acetonitrile to obtain 33.7 g (0.108 mol, yield: 60.9%) of a milk white powder of 6-chloro-2-(3,4-dichlorophenylmethyl)benzimidazole.

### (Synthesis Example 7)

### <Synthesis of 2-(2-naphthylmethyl)benzimidazole (B-3)>

A benzimidazole compound "2-(2-naphthylmethyl)benzimidazole" (may be abbreviated as "B-3") was synthesized by the following method.

A mixture of 50.9 g (0.273 mol) of 2-naphthylacetic acid and 29.5 g (0.273 mol) of o-phenylenediamine was heated until water outflow stopped, thereby obtaining a violet solid. The obtained solid was pulverized with a mortar, 1 L of water and 88 g of sodium carbonate were added thereto, and the obtained mixture was stirred under reflux for 30 minutes. After performing a hot filtration, the obtained solid was subjected to the same operation again. Methanol and activated carbon were added thereto, followed by heating, stirring, and filtration, then water was added little by little to the obtained filtrate as a poor solvent for crystallization, and the obtained crystals were washed with methanol and water, followed by drying to obtain 39.4 g (0.153 mol, yield: 55.8%) of light yellow crystals of 2-(2-naphthylmethyl)benzimidazole.

Chemical formulae of the benzimidazole compounds B-1 to B-3 are shown below.

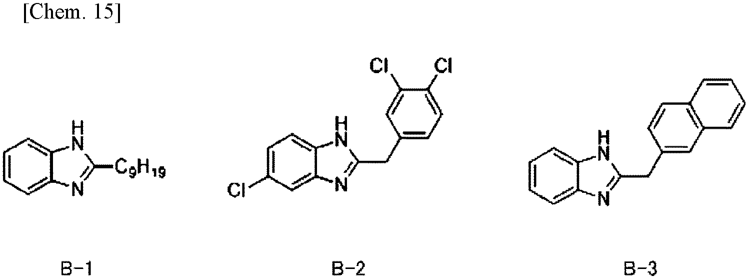

### [Triazole compound]

Triazole compounds used in Examples are as follows.

### (Synthesis Example 8)

### <Synthesis of 3-amino-1,2,4-triazole-1-acetic acid (C-1)>

A triazole compound "3-amino-1,2,4-triazole-1-acetic acid" (may be abbreviated as "C-1") was synthesized by the following method.

To a mixture of 30.1 g (0.357 mol) of 3-amino-1,2,4-triazole and 200 mL of methanol was added gradually a sodium hydroxide aqueous solution which had been obtained by mixing 14.5 g (0.363 mol) of sodium hydroxide and 80.0 g of water in advance. Then, thereto was added 41.6 g (0.357 mol) of sodium monochloroacetate, and the mixture was heated and stirred under reflux overnight. The obtained product was concentrated under a reduced pressure, 100 mL of water was added thereto, and 36.1 g of 36% hydrochloric acid was gradually added thereto while cooling the mixture. A precipitate was filtrated, washed with water and dried, thereby obtaining 24.3 g (0.171 mol, yield: 47.8%) of a white powder of 3-amino-1,2,4-triazole-1-acetic acid.

### (Synthesis Example 9)

### <Synthesis of 5-methyl-3-octyl-1,2,4-triazole (C-2)>

A triazole compound "5-methyl-3-octyl-1,2,4-triazole" (may be abbreviated as "C-2") was synthesized by the following method.

To a mixture of 37.26 g (0.200 mol) of ethyl nonanoate and 100 g of methanol was added 20.02 g (0.400 mol) of hydrazine monohydrate at room temperature, followed by stirring for 1 hour and then, the obtained mixture was further heated and stirred under reflux overnight. The crystals precipitated by cooling were filtered, washed with a small amount of methanol, and then dried to obtain 28.26 g (0.164 mol, yield: 82.0%) of white scale-form crystals of nonanoic acid hydrazide.

To a mixture of 15.60 g (0.165 mol) of acetoamidine hydrochloride and 100 g of methanol were added 34.72 g (0.180 mol) of a 28% sodium methoxide/methanol solution and 25.84 g (0.150 mol) of the nonanoic acid hydrazide. After stirring under reflux overnight, the obtained mixture was cooled and filtered to remove NaCl, and then the filtrate was concentrated under a reduced pressure. To the obtained concentrate were added 80 g of toluene and 80 g of water, and the product was dissolved in toluene. The organic phase was then separated, and concentrated under a reduced pressure until the total amount becomes 40 g. The concentrated solution was cooled and the formed crystals were filtered and dried, thereby obtaining 20.51 g (0.105 mol, yield: 70.0%) of a white powder of 5-methyl-3-octyl-1,2,4-triazole.

### (Synthesis Example 10)

### <Synthesis of 3-benzyl-5-phenyl-1,2,4-triazole (C-3)>

A triazole compound "3-benzyl-5-phenyl-1,2,4-triazole" (may be abbreviated as "C-3") was synthesized by the following method.

To a mixture of 31.3 g (0.200 mol) of benzamidine hydrochloride and 300 mL of ethanol was added a liquid that had been obtained by mixing 240 mL of ethanol and 14.0 g (0.259 mol) of sodium methoxide in advance. The precipitated NaCl was removed by filtration, and then 30.0 g (0.200 mol) of phenylacetic acid hydrazide was added to the obtained filtrate. After stirring under reflux for 1 hour, the reaction solution was concentrated under a reduced pressure to obtain 55.1 g of a tar-like product. Thereto was added water, followed by stirring to obtain a solid. The obtained solid was filtered, dried once, then recrystallized with diethyl ether, and dried to obtain 14.4 g (0.061 mol, yield: 30.6%) of a white powder of 3-benzyl-5-phenyl-1,2,4-triazole.

### (Synthesis Example 11)

### <Synthesis of 3,3'-methylenebis(5-amino-1,2,4-triazole) (C-4)>

A triazole compound "3,3'-methylenebis(5-amino-1,2,4-triazole)" (may be abbreviated as "C-4") was synthesized in accordance with a method described in Russ. J. Applied. Chem., 82 (2), 276 (2009).

Chemical formulae of the triazole compounds C-1 to C-4 are shown below.

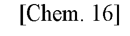

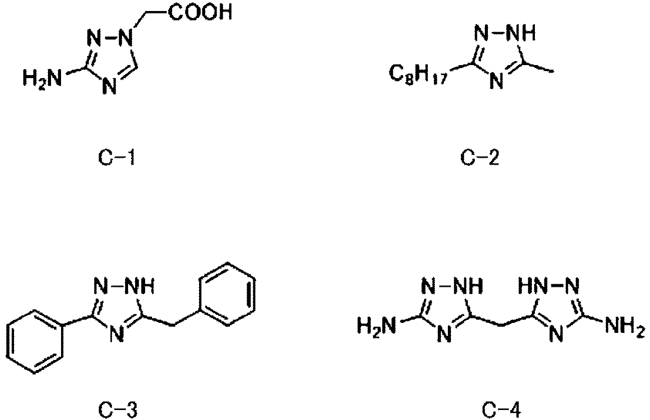

Evaluation test methods adopted in Examples and Comparative Examples are as follows.

### [Evaluation test of solder flow-up property]

As a test piece, a glass epoxy resin printed wiring board having a size of 120 mm (length) × 150 mm (width) × 1.6 mm (thickness) including copper through-holes having inner diameters of 0.60, 0.80, and 1.00 mm (300 holes for each type of through-hole) was used. This test piece was subjected to soft etching, washing with water, and drying under the following conditions, then immersed in a pre-dip liquid held at a predetermined liquid temperature for a predetermined time, washed with water, dried, then immersed in a surface treatment agent held at a predetermined liquid temperature for a predetermined time, then washed with water, and dried to perform surface treatment, thereby forming a chemical conversion coating having a thickness of about 0.2 µm on a copper surface.

For the test piece subjected to the surface treatment, reflow heating was performed under the conditions shown in Tables 1 to 6 by using an infrared ray-combined hot air reflow device (product name: SNR-725GT-MH, manufactured by Senju Metal Industry Co., Ltd.), and then soldering was performed by using a flow soldering device (conveyor speed: 1.0 m/min).

The solder used is "ECOSOLDER M705" (product name, lead-free solder of Sn-3.0Ag-0.5Cu) manufactured by Senju Metal Industry Co., Ltd., and the flux used in soldering is "ES-1062V-1" (product name) manufactured by Senju Metal Industry Co., Ltd. In addition, the soldering temperature was 250°C.

For the test piece subjected to the soldering, the number of through-holes on which the solder was coated (soldered) up to an upper land portion of the copper through-hole was counted, and a proportion (%) thereof to a total number of through-holes (900 holes) was calculated (a solder flow-up property).

As the wettability of the solder with respect to the surface of copper is higher, the molten solder is more likely to permeate the copper through-holes and be coated on up to the upper land portion of the through-holes. That is, it is determined that, as the proportion of the number of the through-holes is large on which the solder is coated on up to the upper land portion to the total number of the through-holes, solder wettability to copper is excellent and the solderability is excellent.

### [Surface treatment of test piece]

The test piece was treated according to the following steps i to iii.
i. Acid cleaning/1 minute (room temperature), washing with water, drying/1 minute (100°C)
ii. Immersion in pre-dip liquid ("PT20" manufactured by Shikoku Chemicals Corporation)/30 seconds (30°C), washing with water, drying/1 minute (100°C)
iii. Immersion in surface treatment liquid/1 minute (40°C), washing with water, drying/1 minute (100°C)

### (Example 1)

2-(3-Chlorobenzyl)-4-(1-naphthyl)imidazole (A-4), 3-amino-1,2,4-triazole-1-acetic acid (C-1), acetic acid, and heptanoic acid were dissolved in ion exchange water, and then pH was adjusted to 3.20 with aqueous ammonia to prepare a surface treatment agent having a composition shown in Table 1.

By using the obtained surface treatment agent, the evaluation test of the solder flow-up property was performed, and the solder flow-up property (%) was measured. In reflow conditions, a peak temperature was set to 260°C and the number of times of heating was 2, as shown in Table 1.

The test results were as shown in Table 1.

### (Examples 2 to 16 and Comparative Examples 1 to 4)

Surface treatment agents were prepared in the same manner as in Example 1 to have the respective compositions as shown in Tables 1 and 2, the obtained surface treatment agents were used to perform the evaluation test of the solder flow-up property under the treatment conditions shown in Tables 1 and 2, and the solder flow-up property (%) was measured.

The test results thereof were as shown in Tables 1 and 2.

### [Table 1]

**Table 1**

| | | | | Example | | | | Comp. Ex. |
|---|---|---|---|---|---|---|---|---|
| | | | | 1 | 2 | 3 | 4 | 1 |
| Surface treatment agent composition (wt%) | Imidazole compound | | A-4 | 0.2 | 0.2 | 0.2 | 0.2 | 0.2 |
| | Benzimidazole compound | | B-1 | | | | | |
| | Triazole compound | | C-1 | 0.1 | | | | |
| | | | C-2 | | 0.075 | | | |
| | | | C-3 | | | 0.025 | | |
| | | | C-4 | | | | 0.01 | |
| | Acid | | Acetic acid | 20 | 20 | 20 | 20 | 20 |
| | | | Heptanoic acid | 0.1 | 0.1 | 0.1 | 0.1 | 0.1 |
| | Ratio of triazole compound to imidazole compound or benzimidazole compound (molar ratio) | | | 1.12 | 0.61 | 0.17 | 0.09 | - |
| | pH | | | 3.20 | 3.20 | 3.20 | 3.25 | 3.20 |
| | Film thickness of chemical conversion coating (µm) | | | 0.22 | 0.19 | 0.22 | 0.21 | 0.17 |
| Evaluation test | Reflow condition | Peak temperature (°C) | | 260 | | | | |
| | | Number of times of heating (times) | | 2 | | | | |
| | Solder flow-up property (%) | | | 98 | 97 | 99 | \| 67 | \| 56 |

**Table 1 (Continued)**

| | | | | Example | | | | Comp. Ex. |
|---|---|---|---|---|---|---|---|---|
| | | | | 5 | 6 | 7 | 8 | 2 |
| Surface treatment agent composition (wt%) | Imidazole compound | | A-4 | | | | | |
| | Benzimidazole compound | | B-1 | 0.2 | 0.2 | 0.2 | 0.2 | 0.2 |
| | Triazole compound | | C-1 | 0.1 | | | | |
| | | | C-2 | | 0.05 | | | |
| | | | C-3 | | | 0.025 | | |
| | | | C-4 | | | | 0.1 | |
| | Acid | | Acetic acid | 20 | 20 | 20 | 20 | 20 |
| | | | Heptanoic acid | | | | | |
| | Ratio of triazole compound to imidazole compound or benzimidazole compound (molar ratio) | | | 0.86 | 0.31 | 0.13 | 0.68 | - |
| | pH | | | 3.60 | 3.60 | 3.60 | 3.65 | 3.50 |
| | Film thickness of chemical conversion coating (µm) | | | 0.20 | 0.21 | 0.23 | 0.22 | 0.18 |
| Evaluation test | Reflow condition | Peak temperature (°C) | | 250 | | | | |
| | | Number of times of heating (times) | | 3 | | | | |
| | Solder flow-up property (%) | | | 52 | 26 | 72 | 38 | 10 |

| | | | | | | | | |
|---|---|---|---|---|---|---|---|---|
| A-4: 2-(3-chlorobenzyl)-4-(1-naphthyl)imidazole B-1: 2-nonylbenzimidazole C-1: 3-amino-1,2,4-triazole-1-acetic acid C-2: 5-methyl-3-octyl-1,2,4-triazole C-3: 3-benzyl-5-phenyl-1,2,4-triazole C-4: 3,3'-methylenebis(5-amino-1,2,4-triazole) | | | | | | | | |

### [Table 2]

**Table 2**

| | | | | Example | | | | Comp. Ex. |
|---|---|---|---|---|---|---|---|---|
| | | | | 9 | 10 | 11 | 12 | 3 |
| Surface treatment agent composition (wt%) | Imidazole compound | | A-4 | 0.2 | 0.2 | 0.2 | 0.2 | 0.2 |
| | Benzimidazole compound | | B-1 | | | | | |
| | Triazole compound | | C-1 | 0.1 | | | | |
| | | | C-2 | | 0.075 | | | |
| | | | C-3 | | | 0.025 | | |
| | | | C-4 | | | | 0.01 | |
| | Halide ion | | Cl⁻ (sodium chloride) | 0.09 (0.15) | 0.09 (0.15) | 0.09 (0.15) | 0.09 (0.15) | 0.09 (0.15) |
| | Acid | | Acetic acid | 20 | 20 | 20 | 20 | 20 |
| | | | Heptanoic acid | 0.1 | 0.1 | 0.1 | 0.1 | 0.1 |
| | Ratio of triazole compound to imidazole compound or benzimidazole compound (molar ratio) | | | 1.12 | 0.61 | 0.17 | 0.09 | |
| | pH | | | 3.20 | 3.20 | 3.20 | 3.25 | 3.20 |
| | Film thickness of chemical conversion coating (µm) | | | 0.20 | 0.20 | 0.21 | 0.18 | 0.21 |
| Evaluation test | Reflow condition | Peak temperature (°C) | | 260 | | | | |
| | | Number of times of heating (times) | | 3 | | | | |
| | Solder flow-up property (%) | | | 35 | 43 | 59 | 34 | 15 |

**Table 2 (Continued)**

| | | | | Example | | | | Comp. Ex. |
|---|---|---|---|---|---|---|---|---|
| | | | | 13 | 14 | 15 | 16 | 4 |
| Surface treatment agent composition (wt%) | Imidazole compound | | A-4 | | | | | |
| | Benzimidazole compound | | B-1 | 0.2 | 0.2 | 0.2 | 0.2 | 0.2 |
| | Triazole compound | | C-1 | 0.1 | | | | |
| | | | C-2 | | 0.05 | | | |
| | | | C-3 | | | 0.025 | | |
| | | | C-4 | | | | 0.1 | |
| | Halide ion | | Cl⁻ (sodium chloride) | 0.09 (0.15) | 0.09 (0.15) | 0.09 (0.15) | 0.09 (0.15) | 0.09 (0.15) |
| | Acid | | Acetic acid | 20 | 20 | 20 | 20 | 20 |
| | | | Heptanoic acid | | | | | |
| | Ratio of triazole compound to imidazole compou or benzimidazole compound (molar ratio) | | | 0.86 | 0.31 | 0.13 | 0.68 | - |
| | pH | | | 3.60 | 3.60 | 3.60 | 3.60 | 3.50 |
| | Film thickness of chemical conversion coating (µm) | | | 0.20 | 0.22 | 0.21 | 0.17 | 0.23 |
| Evaluation test | Reflow condition | Peak temperature (°C) | | 250 | | | | |
| | | Number of times of heating (times) | | 3 | | | | |
| | Solder flow-up property (%) | | | 93 99 91 90 83 | | | | |

| | | | | | | | | |
|---|---|---|---|---|---|---|---|---|
| A-4: 2-(3-chlorobenzyl)-4-(1-naphthyl)imidazole B-1: 2-nonylbenzimidazole C-1: 3-amino-1,2,4-triazole-1-acetic acid C-2: 5-methyl-3-octyl-1,2,4-triazole C-3: 3-benzyl-5-phenyl-1,2,4-triazole C-4: 3,3'-methylenebis(5-amino-1,2,4-triazole) | | | | | | | | |

From the comparison between Examples 1 to 4 and Comparative Example 1, Examples 5 to 8 and Comparative Example 2, Examples 9 to 12 and Comparative Example 3, and Examples 13 to 16 and Comparative Example 4, in the case where the triazole compound (III) was contained in the surface treatment agent together with the imidazole compound (I) or the benzimidazole compound (II), the solder flow-up property was improved. Therefore, it was found that the surface treatment agents of Examples 1 to 16 are excellent in heat resistance of the chemical conversion coating to be obtained.

### (Examples 17 to 20 and Comparative Examples 5 to 8)

Surface treatment agents were prepared in the same manner as in Example 1 to have the respective compositions as shown in Table 3, the obtained surface treatment agents were used to perform the evaluation test of the solder flow-up property under the treatment conditions shown in Table 3, and the solder flow-up property (%) was measured.

The test results thereof were as shown in Table 3.

### [Table 3]

**Table 3**

| | | | Ex. | Comp. Ex. | Ex. | Comp. Ex. |
|---|---|---|---|---|---|---|
| | | | 17 | 5 | 18 | 6 |
| Surface treatment agent composition (wt%) | Imidazole compound | A-4 | 0.2 | 0.2 | 0.2 | 0.2 |
| | Benzimidazole compound | B-1 | | | | |
| | Triazole compound | C-1 | 0.1 | | 0.1 | |
| | Halide ion | Br (ammonium bromide) | 0.09 (0.20) | 0.09 (0.20) | | |
| | | I⁻ (potassium iodide) | | | 0.01 (0.013) | 0.01 (0.013) |
| | Acid | Acetic acid | 20 | 20 | 20 | 20 |
| | | Heptanoic acid | 0.2 | 0.2 | 0.2 | 0.2 |
| | Ratio of triazole compound to imidazole compound or benzimidazole compound (molar ratio) | | 1.12 | - | 1.12 | - |
| | pH | | 3.40 | 3.30 | 3.40 | 3.30 |
| | Film thickness of chemical conversion coating (µm) | | 0.21 | 0.22 | 0.19 | 0.20 |
| Evaluation test | Reflow condition | Peak temperature (°C) | 260 | | 250 | |
| | | Number of times of heating (times) | 2 | | 3 | |
| | Solder flow-up property (%) | | 42 | 1 | 68 | 46 |

**Table 3 (Continued)**

| | | | Ex. | Comp. Ex. | Ex. | Comp. Ex. |
|---|---|---|---|---|---|---|
| | | | 19 | 7 | 20 | 8 |
| Surface treatment agent composition (wt%) | Imidazole compound | A-4 | | | | |
| | Benzimidazole compound | B-1 | 0.2 | 0.2 | 0.2 | 0.2 |
| | Triazole compound | C-1 | 0.1 | | 0.1 | |
| | Halide ion | Br (ammonium bromide) | 0.09 (0.20) | 0.09 (0.20) | | |
| | | I⁻ (potassium iodide) | | | 0.01 (0.013) | 0.01 (0.013) |
| | Acid | Acetic acid | 20 | 20 | 20 | 20 |
| | | Heptanoic acid | | | | |
| | Ratio of triazole compound to imidazole compound or benzimidazole compound (molar ratio) | | 0.86 | - | 0.86 | - |
| | pH | | 3.60 | 3.60 | 3.60 | 3.60 |
| | Film thickness of chemical conversion coating (µm) | | 0.21 | 0.23 | 0.22 | 0.18 |
| Evaluation test | Reflow condition | Peak temperature (°C) | 240 | | 240 | |
| | | Number of times of heating (times) | 3 | | 3 | |
| | Solder flow-up property (%) | | 89 | 43 | 94 | 89 |

| | | | | | | |
|---|---|---|---|---|---|---|
| A-4: 2-(3-chlorobenzyl)-4-(1-naphthyl)imidazole B-1: 2-nonylbenzimidazole C-1: 3-amino-1,2,4-triazole-1-acetic acid | | | | | | |

From the comparison between Example 17 and Comparative Example 5, Example 18 and Comparative Example 6, Example 19 and Comparative Example 7, and Example 20 and Comparative Example 8, even in a system containing a bromide ion and an iodide ion as the halide ions, in the case where the triazole compound (III) was contained in the surface treatment agent together with the imidazole compound (I) or the benzimidazole compound (II), the solder flow-up property was improved.

### (Examples 21 to 30 and Comparative Examples 9 to 18)

Surface treatment agents were prepared in the same manner as in Example 1 to have the respective compositions as shown in Tables 4 and 5, the obtained surface treatment agents were used to perform the evaluation test of the solder flow-up property under the treatment conditions shown in Tables 4 and 5, and the solder flow-up property (%) was measured.

The test results thereof were as shown in Tables 4 and 5.

### [Table 4]

**Table 4**

| | | | Ex. | Comp. Ex. | Ex. | Comp. Ex. | Ex. | Comp. Ex. |
|---|---|---|---|---|---|---|---|---|
| | | | 21 | 9 | 22 | 10 | 23 | 11 |
| Surface treatment agent composition (wt%) | Imidazole compound | A-1 | 0.2 | 0.2 | | | | |
| | | A-2 | | | 0.2 | 0.2 | | |
| | | A-3 | | | | | 0.2 | 0.2 |
| | Benzimidazole compound | B-2 | | | | | | |
| | | B-3 | | | | | | |
| | Triazole compound | C-1 | 0.2 | | 0.1 | | 0.1 | |
| | Halide ion | Cl⁻ (sodium chloride) | 0.09 (0.15) | 0.09 (0.15) | 0.09 (0.15) | 0.09 (0.15) | 0.09 (0.15) | 0.09 (0.15) |
| | Acid | Formic acid | | | | | 2 | 2 |
| | | Acetic acid | 40 | 40 | 20 | 20 | 15 | 15 |
| | | Heptanoic acid | 0.1 | 0.1 | 0.1 | 0.1 | 0.1 | 0.1 |
| | Ratio of triazole compound to imidazole compound or benzimidazole compound (molar ratio) | | 2.49 | - | 1.00 | - | 0.85 | - |
| | pH | | 3.10 | 3.10 | 3.10 | 3.10 | 4.20 | 4.20 |
| | Film thickness of chemical conversion coating (µm) | | 0.20 | 0.21 | 0.22 | 0.21 | 0.19 | 0.20 |
| Evaluation test | Reflow condition (peak temperature/ number of times) | Peak temperature (°C) | 250 | | 240 | | 240 | |
| | | Number of times of heating (times) | 3 | | 2 | | 3 | |
| | Solder flow-up property (%) | | 70 | 60 | 93 | 36 | 78 | 63 |

**Table 4 (Continued)**

| | | | Ex. | Comp. Ex. | Ex. | Comp. Ex. |
|---|---|---|---|---|---|---|
| | | | 24 | 12 | 25 | 13 |
| Surface treatment agent composition (wt%) | Imidazole compound | A-1 | | | | |
| | | A-2 | | | | |
| | | A-3 | | | | |
| | Benzimidazole compound | B-2 | 0.2 | 0.2 | | |
| | | B-3 | | | 0.2 | 0.2 |
| | Triazole compound | C-1 | 0.1 | | 0.05 | |
| | Halide ion | Cl⁻ (sodium chloride) | 0.09 (0.15) | 0.09 (0.15) | 0.09 (0.15) | 0.09 (0.15) |
| | Acid | Formic acid | | | | |
| | | Acetic acid | 20 | 20 | 15 | 15 |
| | | Heptanoic acid | 0.1 | 0.1 | | |
| | Ratio of triazole compound to imidazole compound or benzimidazole compound (molar ratio) | | 1.10 | - | 0.45 | - |
| | pH | | 2.65 | 2.65 | 3.50 | 3.50 |
| | Film thickness of chemical conversion coating (µm) | | 0.22 | 0.20 | 0.19 | 0.20 |
| Evaluation test | Reflow condition (peak temperature/number of times) | Peak temperature (°C) | 260 | | 250 | |
| | | Number of times of heating (times) | 3 | | 3 | |
| | Solder flow-up property (%) | | 80 | 31 | 87 | 46 |

| | | | | | | |
|---|---|---|---|---|---|---|
| A-1: 4-(3,4-dichlorophenyl)-5-methyl-2-nonylimidazole A-2: 2-phenyl-4-(1-naphthyl)-5-methylimidazole A-3: 5-methyl-4-phenyl-2-(2-thienyl)imidazole B-2: 6-chloro-2-(3,4-dichlorophenylmethyl)benzimidazole B-3: 2-(2-naphthylmethyl)benzimidazole C-1: 3-amino-1,2,4-triazole-1-acetic acid | | | | | | |

### [Table 5]

**Table 5**

| | | | | Ex. | Comp. Ex. | Ex. | Comp. Ex. | Ex. | Comp. Ex. |
|---|---|---|---|---|---|---|---|---|---|
| | | | | 26 | 14 | 27 | 15 | 28 | 16 |
| Surface treatment agent composition (wt%) | Imidazole compound | | A-1 | 0.2 | 0.2 | | | | |
| | | | A-2 | | | 0.2 | 0.2 | | |
| | | | A-3 | | | | | 0.2 | 0.2 |
| | Benzimidazole compound | | B-2 | | | | | | |
| | | | B-3 | | | | | | |
| | Triazole compound | | C-1 | 0.2 | | 0.1 | | 0.1 | |
| | Acid | | Formic acid | | | | | 2 | 2 |
| | | | Acetic acid | 40 | 40 | 20 | 20 | 15 | 15 |
| | | | Heptanoic acid | 0.1 | 0.1 | 0.1 | 0.1 | 0.1 | 0.1 |
| | Ratio of triazole compound to imidazole compound or benzimidazole compound (molar ratio) | | | 2.49 | - | 1.00 | - | 0.85 | - |
| | pH | | | 3.10 | 3.10 | 3.10 | 3.10 | 4.20 | 4.20 |
| | Film thickness of chemical conversion coating (µm) | | | 0.19 | 0.20 | 0.2 | 0.21 | 0.19 | 0.20 |
| Evaluation test t | Reflow condition | Peak temperature (°C) | | 250 | | 250 | | 250 | |
| | | Number of times of heating (times) | | 3 | | 3 | | 2 | |
| | Solder flow-up property (%) | | | 68 | 47 | 52 | 8 | 100 | 89 |

**Table 5 (Continued)**

| | | | | Ex. | Comp. Ex. | Ex. | Comp. Ex. |
|---|---|---|---|---|---|---|---|
| | | | | 29 | 17 | 30 | 18 |
| Surface treatment agent composition (wt%) | Imidazole compound | | A-1 | | | | |
| | | | A-2 | | | | |
| | | | A-3 | | | | |
| | Benzimidazole compound | | B-2 | 0.2 | 0.2 | | |
| | | | B-3 | | | 0.2 | 0.2 |
| | Triazole compound | | C-1 | 0.1 | | 0.05 | |
| | Acid | | Formic acid | | | | |
| | | | Acetic acid | 20 | 20 | 15 | 15 |
| | | | Heptanoic acid | 0.1 | 0.1 | | |
| | Ratio of triazole compound to imidazole compound or benzimidazole compound (molar ratio) | | | 1.10 | | 0.45 | |
| | pH | | | 2.65 | 2.65 | 3.50 | 3.50 |
| | Film thickness of chemical conversion coating (µm) | | | 0.22 | 0.21 | 0.21 | 0.20 |
| Evaluation test t | Reflow condition | Peak temperature (°C) | | 260 | | 260 | |
| | | Number of times of heating (times) | | 3 | | 3 | |
| | Solder flow-up property (%) | | | 97 | 82 | 12 | 1 |

| | | | | | | | |
|---|---|---|---|---|---|---|---|
| A-1: 4-(3,4-dichlorophenyl)-5-methyl-2-nonylimidazole A-2: 2-phenyl-4-(1-naphthyl)-5-methylimidazole A-3: 5-methyl-4-phenyl-2-(2-thienyl)imidazole B-2: 6-chloro-2-(3,4- dichlorophenylmethyl)benzimidazole B-3: 2-(2-naphthylmethyl)benzimidazole C-1: 3-amino-1,2,4-triazole-1-acetic acid | | | | | | | |

Even in the case where 4-(3,4-dichlorophenyl)-5-methyl-2-nonylimidazole (A-1), 2-phenyl-4-(1-naphthyl)-5-methylimidazole (A-2), and 5-methyl-4-phenyl-2-(2-thienyl)imidazole (A-3) were added as the imidazole compound (I), and 6-chloro-2-(3,4-dichlorophenylmethyl)benzimidazole (B-2) and 2-(2-naphthylmethyl)benzimidazole (B-3) were used as the benzimidazole compound (II), when the triazole compound (III) was contained in the surface treatment agent together with the imidazole compound (I) or the benzimidazole compound (II), the solder flow-up property was improved.

### (Examples 31 and 32 and Comparative Examples 19 and 20)

Surface treatment agents were prepared in the same manner as in Example 1 to have the respective compositions as shown in Table 6, the obtained surface treatment agents were used to perform the evaluation test of the solder flow-up property under the treatment conditions shown in Table 6, and the solder flow-up property (%) was measured.

The test results thereof were as shown in Table 6.

### [Table 6]

**Table 6**

| | | | | Ex. | Comp. Ex. | Ex. | Comp. Ex. |
|---|---|---|---|---|---|---|---|
| | | | | 31 | 19 | 32 | 20 |
| Surface treatment agent composition (wt%) | Imidazole compound | | A-2 | 0.2 | 0.2 | | |
| | | | A-3 | | | 0.2 | 0.2 |
| | Triazole compound | | C-1 | 0.1 | | 0.1 | |
| | Halide ion | | Cl⁻ (sodium chloride) | 0.09 (0.15) | 0.09 (0.15) | 0.09 (0.15) | 0.09 (0.15) |
| | Acid | | Formic acid | | | 2 | 2 |
| | | | Acetic acid | 20 | 20 | 15 | 15 |
| | | | Heptanoic acid | 0.1 | 0.1 | 0.1 | 0.1 |
| | Metal ion | | Zn²⁺ (zinc acetate) | 0.3 (1.0) | 0.3 (1.0) | 0.3 (1.0) | 0.3 (1.0) |
| | Chelating agent | | Chelating agent (GEDTA) | 0.06 | 0.06 | 0.06 | 0.06 |
| | Ratio of triazole compound to imidazole compound or benzimidazole compound (molar ratio) | | | 1.00 | - | 0.85 | - |
| | pH | | | 3.10 | 3.10 | 4.20 | 4.20 |
| | Film thickness of chemical conversion coating (µm) | | | 0.20 | 0.19 | 0.19 | 0.21 |
| Evaluation test | Reflow condition | Peak temperature (°C) | | 240 | | 240 | |
| | | Number of times of heating (times) | | 2 | | 2 | |
| | Solder flow-up property (%) | | | 94 | 89 | 100 | 87 |

| | | | | | | | |
|---|---|---|---|---|---|---|---|
| A-2: 2-phenyl-4-(1-naphthyl)-5-methylimidazole A-3: 5-methyl-4-phenyl-2-(2-thienyl)imidazole C-1: 3-amino-1,2,4-triazole-1-acetic acid | | | | | | | |

From the comparison between Example 31 and Comparative Example 19, and Example 32 and Comparative Example 20, even in a system containing a metal ion, in the case where the triazole compound (III) was contained in the surface treatment agent together with the imidazole compound (I), the solder flow-up property was improved.

Although the present invention has been described in detail with reference to specific embodiments, it will be apparent to those skilled in the art that various changes and modifications can be made without departing from the spirit and scope of the present invention. The present application is based on Japanese Patent Application No. 2022-054331 filed on March 29, 2022, and the contents are incorporated herein by reference.

### INDUSTRIAL APPLICABILITY

According to the present invention, it is possible to provide a surface treatment agent and a surface treatment method achieving excellent solderability by forming a chemical conversion coating having excellent heat resistance and wettability with solder on a surface of copper or a copper alloy constituting a circuit portion or the like of a printed wiring board when bonding an electronic component or the like to the printed wiring board by using solder.

## Claims

1. A surface treatment agent for copper or a copper alloy, comprising:
an imidazole compound represented by Chemical Formula (I) or a benzimidazole compound represented by Chemical Formula (II); and
a triazole compound represented by Chemical Formula (III): 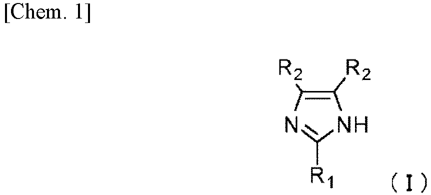
(in Formula (I), R₁ represents a hydrogen atom, a linear or branched alkyl group having 1 to 18 carbon atoms, a cycloalkyl group, a phenyl group which may have a substituent, a naphthyl group which may have a substituent, a benzyl group which may have a substituent, a naphthylmethyl group, -CH-(Ph)₂, - (CH₂)ₖ-Ph, a thienyl group, a thienylmethyl group, a furyl group, or a pyridyl group, where Ph represents a phenyl group which may have a substituent, and k represents an integer of 2 to 5,
R₂'s are the same as or different from each other, and each represent a hydrogen atom, a linear or branched alkyl group having 1 to 18 carbon atoms, a cycloalkyl group, a phenyl group which may have a substituent, a naphthyl group which may have a substituent, a thienyl group, or a furyl group, where the case where R₂'s are hydrogen atoms at the same time is excluded), 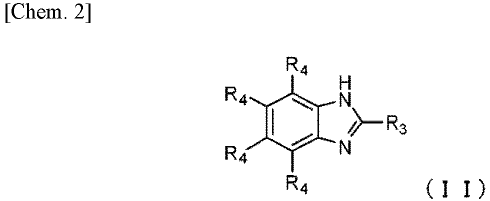
(in Formula (II), R₃ represents a linear or branched alkyl group having 1 to 18 carbon atoms, - (CH₂)ₘ-Ph, -(CH₂)ₘ-Np, or a group represented by Formula (1), where Ph represents a phenyl group which may have a substituent, Np represents a naphthyl group which may have a substituent, and m represents an integer of 1 to 5, 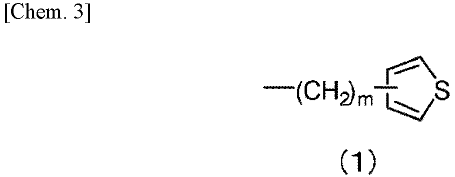
(in Formula (1), m represents an integer of 1 to 5),
R₄'s are the same as or different from each other and each represent a hydrogen atom, a linear or branched alkyl group having 1 to 18 carbon atoms, a nitro group, or a halogen atom), and 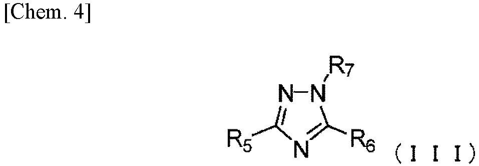
(in Formula (III), R₅ and R₆ are the same as or different from each other and each represent a hydrogen atom, a linear or branched alkyl group having 1 to 18 carbon atoms, an amino group, a phenyl group which may have a substituent, a benzyl group which may have a substituent, a naphthyl group, a pyridyl group, or a group represented by Formula (2), where the case where R₅ and R₆ are groups represented by Formula (2) at the same time is excluded, 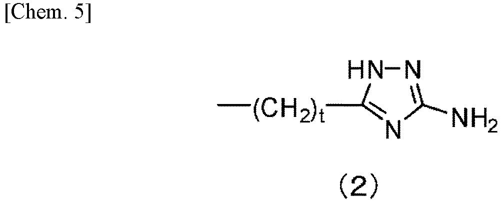
(in Formula (2), t represents an integer of 0 to 12), and
R₇ represents a hydrogen atom, a benzyl group, or -(CH₂)ₙ-COOH, and n represents an integer of 1 to 5).

2. The surface treatment agent for copper or a copper alloy according to claim 1, further comprising a halide ion.

3. The surface treatment agent for copper or a copper alloy according to claim 2, wherein the halide ion is a chloride ion.

4. The surface treatment agent for copper or a copper alloy according to any one of claims 1 to 3, further comprising a zinc ion.

5. The surface treatment agent for copper or a copper alloy according to any one of claims 1 to 4, wherein the triazole compound represented by Chemical Formula (III) is contained in a molar ratio of 0.005 to 3.0 with respect to the imidazole compound represented by Chemical Formula (I) or the benzimidazole compound represented by Chemical Formula (II).

6. The surface treatment agent for copper or a copper alloy according to any one of claims 1 to 5, wherein pH is 2 to 5.
